# EUROPEAN PATENT SPECIFICATION

(11) **EP 3 251 932 B1**
(45) Date of publication and mention of the grant of the patent: **28.11.2018**
(21) Application number: 17172514.6
(22) Date of filing: 23.05.2017
(51) Int. Cl.: B62K 11/04, B62K 19/46

(54) **STRADDLED VEHICLE**
GRÄTSCHSITZFAHRZEUG
VÉHICULE À ENFOURCHER

(30) Priority: 31.05.2016 JP 2016108996
(43) Date of publication of application: 06.12.2017
(73) Proprietor: Yamaha Hatsudoki Kabushiki Kaisha, Iwata-shi Shizuoka 438-8501 (JP)
(72) Inventor: TAKAHASHI, Takumi, Iwata-shi, Shizuoka 438-8501 (JP); KATANO, Wataru, Iwata-shi, Shizuoka 438-8501 (JP)
(74) Representative: Grünecker Patent- und Rechtsanwälte PartG mbB

(56) References cited:
- EP-A1- 2 505 467
- CN-U- 201 694 300
- FR-A1- 2 784 059
- GB-A- 2 062 086
- JP-A- S60 154 971
- JP-A- 2010 247 816
- JP-A- 2014 043 206
- JP-U- S5 058 462
- US-A- 3 779 597

## Description

This invention relates to a straddled vehicle, and more particularly to a construction for holding a helmet or other objects.

Two-wheeled motor vehicles and three-wheeled motor vehicles are classified into straddled vehicles and scooter type vehicles, for example. A straddled vehicle is a two-wheeled motor vehicle or three-wheeled motor vehicle driven by a rider straddling the seat. A scooter type vehicle is a two-wheeled motor vehicle or three-wheeled motor vehicle driven by a rider seated with their legs close together instead of straddling the seat. In this specification, the term "straddled vehicle", does not include a scooter type vehicle. In this specification, the term "straddled vehicle" may refer to a two-wheeled motor vehicle or a three-wheeled motor vehicle.

A straddled vehicle described in Japanese utility model publication S49-37882 has a vehicle body, a shaft, a seat, a locking device, components, and an engaging member. The shaft is provided on one side edge of an upper surface of the vehicle body. The seat is attached to be rockable about the shaft. The rocking of the seat opens and closes the upper surface of the vehicle body. The locking device locks the seat to a position covering the upper surface of the vehicle body. The locking device is operated with a key. The components are a battery, tools, and so on. The components are installed between the vehicle body and the seat. The engaging member is also installed between the vehicle body and the seat. The published French patent application FR 2 784 059 A1 discloses all of the features of the preamble of claim 1.

When the rider rides the straddled vehicle, the rider is seated on the seat locked to the vehicle body. When the rider puts a helmet on the straddled vehicle, the rider opens the locking device with the key, and rocks the seat to open the upper surface of the vehicle body. The rider hooks a chin strap of the helmet on the engaging member and hangs the helmet laterally of the vehicle body. The rider rocks the seat again to cover the upper surface of the vehicle body with the seat, and operates the locking device with the key to lock the seat to the vehicle body. Consequently, the helmet is held by the straddled vehicle. Since the engaging member is covered by the seat and the seat is fixed to the vehicle body, the helmet cannot be removed from the engaging member. That is, the helmet is protected against theft, and can be kept safely.

Incidentally, in the case of most scooter type vehicles, a helmet itself is stored in a storage box formed below the seat.

However, the conventional example with such construction has the following problem.

The conventional straddled vehicle uses the locking device in a seat mounting structure. In order for the locking device to fix the seat smoothly, an appropriate gap is required between the vehicle body and the seat. That is, a gap between the vehicle body and the seat improves lock manipulability. However, the gap between the vehicle body and the seat will cause shakiness of the seat. When the seat becomes shaky, the rider cannot sit on the seat comfortably. That is, the gap between the vehicle body and the seat impairs comfort at the time of riding. Conversely, no gap between the vehicle body and the seat can improve comfort at the time of riding, but impairs lock manipulability. Thus, where the seat mounting structure includes the locking device, it is difficult to achieve a reconciliation between lock manipulability and comfort at the time of riding. An attempt to satisfy both will make the seat mounting structure complicated. The complication of the seat mounting structure will lead to increased cost of the straddled vehicle.

Supposing the locking device is omitted from the seat mounting structure and the seat is fixed to the vehicle body with a bolt, the seat mounting structure would be simplified. In this case, however, the seat would not be removed easily from the vehicle body, and it would be difficult to have the helmet held by the straddled vehicle.

This invention has been made having regard to the state of the art noted above, and its object is to provide a straddled vehicle which can easily hold a helmet or other objects while simplifying a seat mounting structure.

First, in order to simplify the seat mounting structure, inventors herein decided to employ a seat mounting structure which fixes a seat to a vehicle body with a bolt, without including a locking device.

When the seat is fastened to the vehicle body with a bolt, a side cover may be attached to the vehicle body to be easily detachable therefrom in order to maintain accessibility to at least one of a battery, air cleaner and tool compartment. In this case, at least one of the battery, air cleaner and tool compartment is installed inward of the side cover. By detaching the side cover, the battery and air cleaner can be changed easily or tools in the tool compartment can be taken out easily.

Then, inventors directed their attention to the above easily attachable and detachable side cover, and considered installation of a hook that can enable hanging of a helmet or other objects inward of the side cover. Since the side cover primarily is not a member for the rider to sit on unlike the seat, the side cover bends or warps easily compared with the seat. Therefore, even though the side cover is fixed to the vehicle body, the side cover will bend or warp when pushed or pulled in a transverse direction of the vehicle. There is a possibility that such bending or warping of the side cover will result in part of a clearance between the side cover and the vehicle body becoming large enough to allow insertion of a hand or fingers. This means that the helmet can be stolen, depending on the position of the hook. Thus, inventors have concluded that the hook can be installed in any location, which, however, is not without a problem.

Incidentally, a clamp and a lock are often used in a side cover mounting structure. The clamp can fix the side cover to the vehicle body by applying a moderate force to the clamp. When, for example, the side cover is pressed on the vehicle body, the side cover is fixed to the vehicle body by the clamp. On the other hand, the lock is operable by a key to fix the side cover to the vehicle body. The lock can fix the side cover to the vehicle body more firmly than the clamp.

Inventors therefore researched on installing the hook near the lock. While the lock fixes the side cover to the vehicle body, a portion of the side cover near the lock hardly bends. Therefore, if the hook is disposed near the lock, theft of the helmet can be prevented conveniently. However, since the helmet is hung near the lock in this arrangement, the helmet becomes obstructive to an operation to insert the key in the lock. Thus, inventors have found a new problem that the helmet hung on the hook obstructs the operation of the lock.

Then, inventors researched on installing the hook near the clamp. Since the helmet is hung near the clamp, the helmet will not obstruct the operation of the lock. In this arrangement, however, when the side cover is strongly pulled, the clamp will come undone, which allows the portion of the side cover near the clamp to bend to a large extent, thereby rendering the helmet vulnerable to theft. Thus, inventors have found a new problem also in installing the hook near the clamp.

Inventors have made it the point at issue that there is a possibility of the clamp coming undone even while the clamp fixes the side cover to the vehicle body. And inventors have engaged in intensive research on a mounting structure for the side cover which can firmly fix the side cover to the vehicle body.

Along with the above-noted research on the mounting structure for the side cover, inventors also researched on installing the hook in such a way that the whole hook overlaps the side cover as seen from a side. Since, according to this arrangement, the whole hook is covered by the side cover as seen from the side (that is, the whole hook hides inward of the side cover as seen from the side), theft of the helmet can be prevented conveniently. However, when the chin strap of the helmet is short, or when a ring for engaging the hook is attached close to the helmet, there is a possibility that the helmet hung on the hook will be obstructive to a proper attachment of the side cover to the vehicle body. Inventors have found such problems, and based on these findings carried out further research on the position of the hook.

Based on the above findings, this invention provides the following construction. A straddled vehicle according to this invention comprises:
a frame including:
   a main frame extending rearward and downward from a front of the straddled vehicle;
   a seat frame connected to the main frame and extending rearward from the main frame; and
   a back stay connected to the main frame in a position lower than a connecting position of the main frame and the seat frame, extending rearward and upward from the main frame, and connected to the seat frame in a position rearward of the connecting position of the main frame and the seat frame;
a seat fixed to the seat frame by a bolt;
a side cover having at least part thereof disposed, in a side view of the vehicle, in a first area surrounded by the main frame, the seat frame, and the back stay;
a lock attached to the side cover and operable by a key to fix the side cover to the frame;
a junction member for detachably joining the side cover to the frame; and
a hook supported by the frame;
wherein
the side cover, in the side view of the vehicle, overlaps at least part of at lease one of a battery, an air cleaner, and a tool compartment in the first area;
the junction member joins the side cover to the frame to be slidable in a first direction relative to the frame;
the junction member includes:
   a first member fixed to the frame; and
   a second member fixed to the side cover for joining to and separating from the first member by moving in the first direction relative to the first member;
the first direction has a first component extending in a transverse direction of the straddled vehicle, and a second component extending perpendicular to the transverse direction and larger than the first component;
when the junction member joins the side cover to the frame, the junction member prohibits the side cover from moving in the transverse direction relative to the frame;
an upper end of the hook overlaps the side cover in the side view of the vehicle;
a bottom of the hook does not overlap the side cover in the side view of the vehicle; and
the hook is disposed in a position closer to the junction member than to the lock in the side view of the vehicle.

The straddled vehicle according to this invention, with the seat fixed to the seat frame by a bolt, can simplify a seat mounting structure.

The straddled vehicle with the hook can easily hold a helmet or other objects. The straddled vehicle includes the side cover installed separately from the seat, and the upper end of the hook overlaps the side cover in the side view of the vehicle. This construction can prevent theft of the helmet or other objects hung on the hook. That is, the straddled vehicle can safely keep the helmet or other objects.

The straddled vehicle includes the lock for detachably fixing the side cover to the frame, and the junction member for detachably joining the side cover to the frame. These allow the side cover easily to be attached to and detached from the frame. By detaching the side cover from the frame, the helmet or other objects can easily be hung on the hook, and the helmet or other objects hung on the hook can easily be removed. Thus, the straddled vehicle can hold the helmet or other objects easily.

The lock, which cannot be opened without the key, can further prevent theft of the helmet or other objects.

The junction member includes a first member fixed to the frame, and a second member fixed to the side cover for joining to and separating from the first member. Here, the first member may be directly fixed to the frame or indirectly fixed to the frame. With such construction of the junction member, the junction member joins the side cover to the frame in a way that the side cover is slidable in the first direction relative to the frame. Here, the first direction has a first component parallel to the transverse direction, and a second component perpendicular to the transverse direction, the second component being larger than the first component. The second component is a resultant of a component in a longitudinal direction and a component in an up-down direction. Therefore, when the junction member joins the side cover to the frame, the junction member prohibits the side cover from moving in the transverse direction relative to the frame. Consequently, when the junction member joins the side cover to the frame, the junction member can conveniently prevent the side cover from coming off the frame against a force pulling the side cover in the transverse direction. In other words, when the junction member joins the side cover to the frame, even if a force in the transverse direction is applied to the side cover, the junction member can firmly maintain the jointed state of the side cover and the frame. Therefore, when the junction member joins the side cover to the frame, the junction member can conveniently inhibit bending and warping of the side cover. This can prevent theft of the helmet or other objects with increased effect.

The second member joins with and separates from the first member by moving in the first direction relative to the first member. With such construction of the junction member, the first member and second member join together and separate from each other when the side cover moves in the first direction relative to the frame. In other words, with the side cover moving in the first direction relative to the frame, the side cover and frame are joined by the junction member, and the junction by the junction member is canceled. Since the direction of attachment and detachment of the side cover and frame is the same as the first direction (that is, the sliding direction of the side cover relative to the frame), the junction member can attach and detach the side cover to/from the frame with increased ease.

Since the hook is disposed in the position closer to the junction member than to the lock in the side view of the vehicle, the helmet or other objects hung on the hook will not obstruct the key operation on the lock.

Further, the bottom of the hook does not overlap the side cover in the side view of the vehicle. That is, the bottom of the hook is located in the position lower than the side cover. Therefore, the helmet or other objects hung on the hook will not obstruct attachment of the side cover to the frame.

Incidentally, the side cover is disposed to have at least part thereof overlapping the first area in the side view of the vehicle. And in the side view of the vehicle, the side cover overlaps at least part of at lease one of a battery, an air cleaner, and a tool compartment in the first area. As is clear from these arrangements, the primary role of the side cover is to cover and expose at least one of the battery, air cleaner, and tool compartment easily. According to this invention, by using the side cover having such a primary function, the helmet or other objects can be kept conveniently.

As described above, the straddled vehicle according to this invention can easily hold a helmet or other objects while simplifying the seat mounting structure. The "hook" in this invention may be used to hang a helmet, or to hold objects other than the helmet.

Preferably, the above straddled vehicle further comprises a receiver fixed to the frame for joining with the lock; wherein the hook is disposed in a position closer to the first member than to the receiver in the side view of the vehicle. Since the hook is disposed in the position closer to the first member than to the receiver in the side view of the vehicle, there is no possibility that the helmet or other objects hung on the hook will obstruct the key operation on the lock. The hook may be fixed directly to the frame, or indirectly to the frame.

In the above straddled vehicle, it is preferred that at least one of the first member and the second member includes a projection extending in the first direction; when the first member includes the projection, the second member includes a bore into which the projection of the first member can be inserted; and when the second member includes the projection, the first member includes a bore into which the projection of the second member can be inserted. The first member and second member can conveniently join with each other and can conveniently separate from each other.

In the above straddled vehicle, it is preferred that the first member is fixed to a bracket connected to both the seat frame and the back stay, and the second member is formed integral with the side cover. The first member can be fixed to the frame conveniently through the bracket, and the second member can be installed easily.

In the above straddled vehicle, it is preferred that the side cover includes a first edge portion extending along an imaginary line linking the lock and the junction member in the side view of the vehicle; and the hook intersects the first edge portion in the side view of the vehicle. When the lock fixes the side cover to the frame and the junction member joins the side cover to the frame, the lock and junction member can conveniently inhibit bending or warping of the first edge portion. Since such first edge portion intersects the hook in the side view of the vehicle, the straddled vehicle can keep the helmet or other objects further safely.

In the above straddled vehicle, it is preferred that the hook includes an upper part located above the back stay in the side view of the vehicle; an overlapping part overlapping the back stay in the side view of the vehicle; and a lower part located below the back stay in the side view of the vehicle; and the first edge portion intersects at least one of the overlapping part and the lower part in the side view of the vehicle. According to the above, the part of the hook intersecting the first edge portion is limited to at least one of the overlapping part and the lower part in the side view of the vehicle. The whole of the upper part is therefore located higher than the first edge portion, and overlaps the side cover in the side view of the vehicle. Thus, the straddled vehicle can keep the helmet or other objects all the more safely.

In the above straddled vehicle, it is preferred that the side cover includes a turnback extending inward of the transverse direction from the first edge portion, and a cutout formed in the turnback; and the hook passes through the cutout. Since the side cover has the turnback and cutout, the turnback can appropriately surround the hook in a bottom view. In the bottom view, therefore, the turnback can easily cover the upper end of the hook. In other word, the turnback can easily hide the upper end of the hook in the bottom view. Consequently, the straddled vehicle can keep the helmet or other objects all the more safely. Further, the turnback can effectively inhibit bending of the side cover.

In the above straddled vehicle, it is preferred that the upper end of the hook overlaps the side cover in a bottom view. Since the side cover covers the upper end of the hook in the bottom view (that is, since the side cover hides the upper end of the hook in the bottom view), the straddled vehicle can keep the helmet or other objects all the more safely.

In the above straddled vehicle, it is preferred that the hook includes a first part inclined outward in the transverse direction as the first part extends upward to the upper end of the hook. Since the hook has the first part, the side cover can conveniently cover the upper end of the hook. In other words, since the hook has the first part, the upper end of the hook can conveniently be located in a position hidden by the side cover and invisible in the bottom view.

In the above straddled vehicle, it is preferred that, when the lock fixes the side cover to the frame, the lock and the junction member are located, in a bottom view, on the same straight line parallel to a longitudinal direction of the straddled vehicle. Stress can conveniently be prevented from concentrating on at least one of the lock and junction member when attaching and detaching the side cover to/from the frame.

Preferably, the above straddled vehicle further comprises a receiver fixed to the frame for joining with the lock; wherein, when the lock is joined with the receiver, the lock is prohibited from moving relative to the receiver. When the lock fixes the side cover to the frame, the lock can firmly fix the side cover to the frame.

Preferably, the above straddled vehicle further comprises a battery holder supported by the frame, and a battery held by the battery holder; wherein the side cover, in the side view of the vehicle, overlaps at least part of the battery in the first area; and the receiver is supported by the battery holder. The construction in which the battery holder for holding the battery also supports the receiver allows omission of a member dedicated to supporting the receiver. That is, the receiver can be installed simply.

In the above straddled vehicle, it is preferred that a material for the battery holder and the receiver is a resin, and the battery holder and the receiver are formed integral with each other. Since the receiver is formed of a resin, the cost of the receiver can be reduced. Since the receiver is formed integral with the battery holder, the receiver can be installed further simply.

Preferably, the above straddled vehicle further comprises an engine disposed forward of the side cover. The side cover can conveniently be installed rearward of the engine. A component (e.g. at least one of the battery, air cleaner, and tool compartment) which overlaps the side cover in a side view of the vehicle can also conveniently be installed rearward of the engine.

For the purpose of illustrating the invention, there are shown in the drawings several forms which are presently preferred, it being understood, however, that the invention is not limited to the precise arrangement and instrumentalities shown.
Fig. 1 is a left side view of a straddled vehicle according to an embodiment;
Fig. 2 is a plan view of the straddled vehicle according to the embodiment;
Fig. 3 is a side view of a frame;
Fig. 4 is a side view showing part of a left side of the straddled vehicle;
Fig. 5 is a perspective view showing part of the left side of the straddled vehicle.
Fig. 6 is a side view showing part of the left side of the straddled vehicle;
Fig. 7 is a section taken on line a-a of Fig. 6;
Fig. 8 is an explanatory view of a first direction;
Fig. 9 is a section taken on line b-b of Fig. 6;
Fig. 10 is a section taken on line c-c of Fig. 6;
Fig. 11 is a detailed side view of a hook;
Fig. 12 is a detailed side view of the hook and a side cover;
Fig. 13 is a section taken on line d-d of Fig. 6;
Fig. 14 is a detailed side view of the hook and a back stay;
Fig. 15 is a detailed side view of the hook, back stay, and side cover.
Fig. 16 is a bottom view of the side cover and hook;
Fig. 17 is a perspective view of the side cover and hook seen from an obliquely downward direction;
Fig. 18 is a side view showing part of the left side of the straddled vehicle holding a helmet;
Fig. 19 is a rear view of the straddled vehicle holding the helmet;
Fig. 20 is a sectional view of the hook, helmet, and side cover;
Fig. 21 is a side view showing part of a right side of a straddled vehicle according to a modified embodiment;
Fig. 22 is a plan view of a frame; and
Fig. 23 is an explanatory view of a first direction according to a modified embodiment.

A straddled vehicle 1 according to this invention will be described hereinafter with reference to the drawings.

### 1. Outline construction of the straddled vehicle

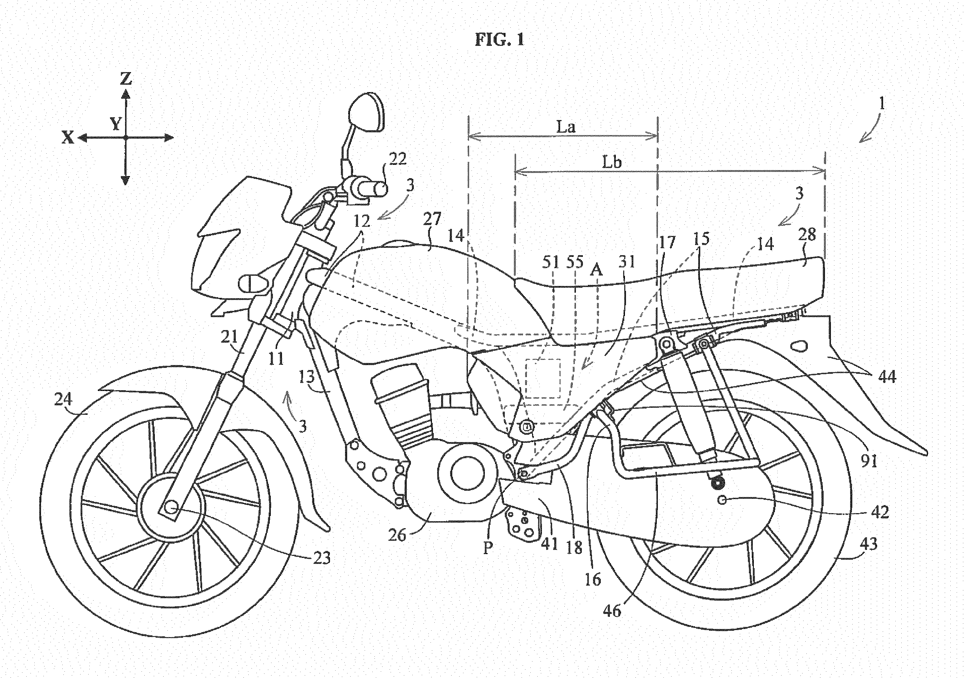

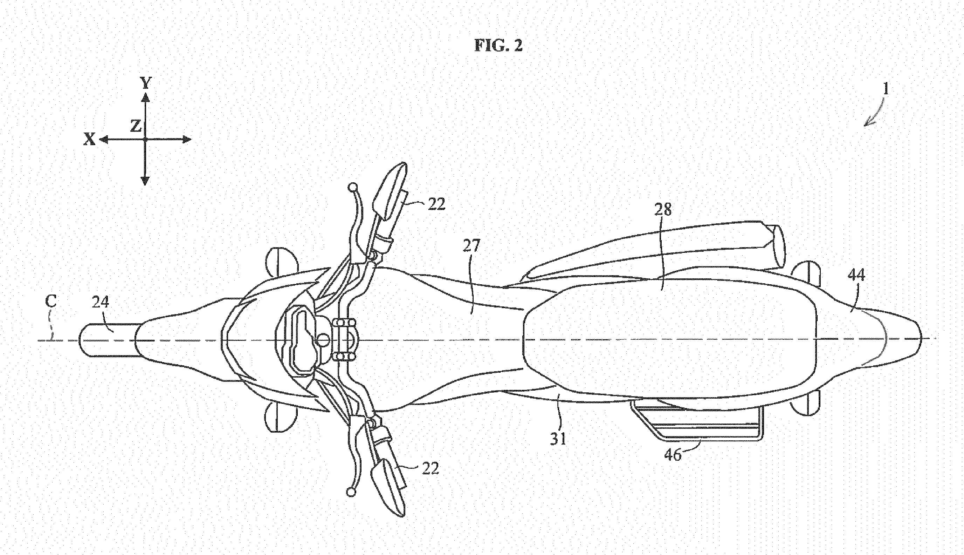

Fig. 1 is a left side view of the straddled vehicle according to an embodiment. Fig. 2 is a plan view of the straddled vehicle according to the embodiment.

Figs. 1 and 2 show a longitudinal direction X, a transverse direction Y, and an up-down direction Z of the straddled vehicle 1. The longitudinal direction X, transverse direction Y, and up-down direction Z are defined with reference to a rider mounted on the straddled vehicle 1. The longitudinal direction X, transverse direction Y, and up-down direction Z are perpendicular to one another.

Fig. 2 shows a vehicle center C. The vehicle center C is a plane including the center of the straddled vehicle 1 and perpendicular to the transverse direction Y. Of the transverse direction Y, a direction toward the vehicle center C will be called "inward in the transverse direction Y" as appropriate. The direction opposite to "inward in the transverse direction Y" will be called "outward in the transverse direction Y".

In the following description, simple references to "forward", "rearward", "upward", "downward", rightward", and "leftward" mean "forward", "rearward", "upward", "downward", rightward", and "leftward" as seen from the rider mounted on the straddled vehicle 1.

The straddled vehicle 1 includes a frame 3. The frame 3 has a head tube 11, a main frame 12, and a down tube 13. The head tube 11 is disposed at the front of the straddled vehicle 1. The main frame 12 is connected to the head tube 11. The main frame 12 extends rearward and downward from the front (i.e. head tube 11) of the straddled vehicle 1. The down tube 13 is also connected to the head tube 11. The down tube 13 extends rearward and downward from the head tube 11, below the main frame 12.

The straddled vehicle 1 includes a front fork 21, a handlebar 22, an axle 23, and a front wheel 24. The front fork 21 is rotatably supported by the head tube 11. The handlebar 22 is attached to an upper part of the front fork 21. The axle 23 is attached to a lower part of the front fork 21. The front wheel 24 is rotatably supported by the axle 23.

The straddled vehicle 1 includes an engine 26 and a fuel tank 27. The engine 26 and fuel tank 27 are supported by the frame 3. Specifically, the engine 26 is directly supported by the main frame 12 and down tube 13. The fuel tank 27 is directly supported by the main frame 12.

The straddled vehicle 1 has a seat 28 and a side cover 31. The seat 28 and side cover 31 are members different from each other. The seat 28 and side cover 31 are installed separately. The seat 28 is provided on an upper part of the frame 3. The side cover 31 is provided laterally of the frame 3. The seat 28 and side cover 31 have functions different from each other. The seat 28 is a member for the rider to sit on. The side cover 31 is not a member for the rider to sit on. The side cover 31 is a member for covering an area outward in the transverse direction Y of a battery 51 and tool compartment 55 as described hereinafter. The seat 28 and side cover 31 are also different in size. The side cover 31 is smaller than the seat 28. The side cover 31 has a length La in the longitudinal direction X shorter than a length Lb of the seat 28 in the longitudinal direction X (see Fig. 1).

The straddled vehicle 1 includes a swing arm 41, an axle 42, a rear wheel 43, and a rear fender 44. The swing arm 41 is supported by the main frame 12 to be swingable about a pivotal axis P. The swing arm 41 extends rearward from the main frame 12. The axle 42 is attached to a rear part of the swing arm 41. The rear wheel 43 is rotatably supported by the axle 42. The rear fender 44 is disposed above the rear wheel 43. The straddled vehicle 1 further includes a power transmission device (not shown) for transmitting the power of the engine 26 to the rear wheel 43. The power transmission device includes a chain or belt, for example.

### 2. Details of frame 3

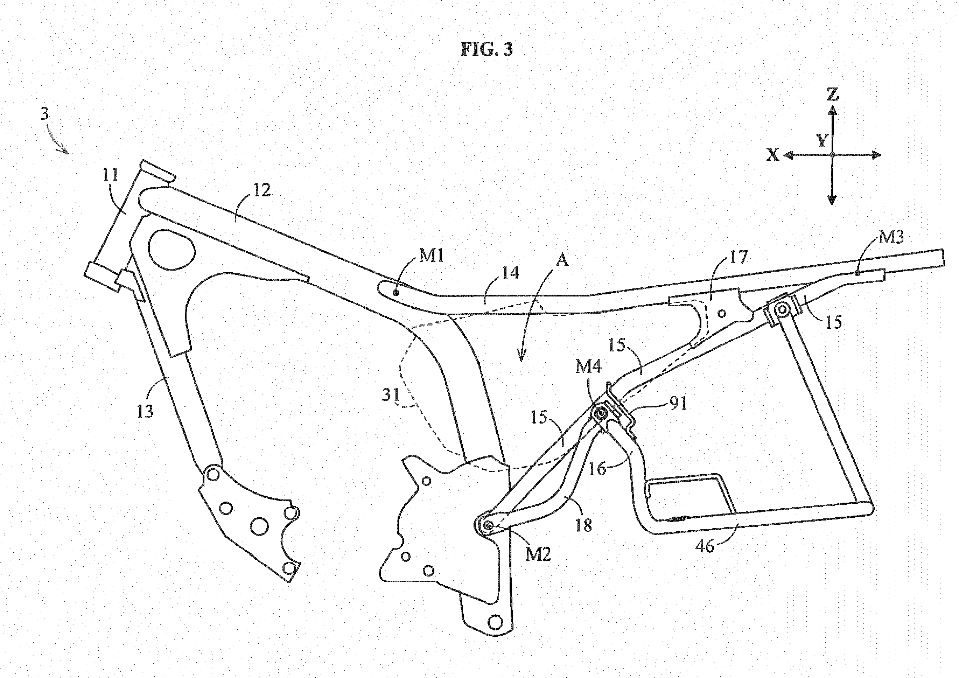

Fig. 3 is a side view of the frame 3. The frame 3 further includes a seat frame 14 and a back stay 15. The seat frame 14 is connected to the main frame 12. Fig. 3 shows a connecting position M1 between the main frame 12 and seat frame 14. The seat frame 14 extends rearward from the main frame 12. The back stay 15 is connected to the main frame 12 in a connecting position M2 below the connecting position M1. The connecting position M2 is located on the pivotal axis P. The back stay 15 extends rearward and upward from the main frame 12. The back stay 15 is connected to the seat frame 14 in a connecting position M3 rearward of the connecting position M2. Since the back stay 15 extends rearward and upward, the connecting position M3 is higher than the connecting position M2.

In this specification, an area surrounded by the main frame 12, seat frame 14, and back stay 15 is called "first area A". The first area A, when seen laterally of the straddled vehicle 1 (which will hereinafter be expressed "in a/the side view of the vehicle" or simply "in a/the side view"), is a range rearward of the main frame 12, below the seat frame 14, and above the back stay 15. The first area A is an approximately triangular range in the side view whose vertexes are the connecting positions M1, M2 and M3.

The frame 3 further includes a rear footrest stay 16. The rear footrest stay 16 is connected to the back stay 15 in a connecting position M4. The connecting position M4 is located rearward of the connecting position M2 and forward of the connecting position M3. The rear footrest stay 16 extends downward from the connecting position M4.

The rear footrest stay 16 supports a rear footrest 46. The rear footrest 46 is a member for supporting a foot of a passenger mounted on the straddled vehicle 1 with the rider. In this embodiment, the rear footrest stay 16 and rear footrest 46 are formed of the same member, and are inseparable from each other. The rear footrest stay 16 is also called a tandem foot bracket. The rear footrest 46 is also called a tandem footrest.

The frame 3 further includes a bracket 17 and a reinforcing arm 18. The bracket 17 is connected to both the seat frame 14 and back stay 15. Specifically, the bracket 17 is connected to the seat frame 14 adjacent the connecting position M3, and to the back stay 15 adjacent the connecting position M3. The reinforcing arm 18 has a front end thereof connected to the main frame 12. A connecting position between the reinforcing arm 18 and main frame 12 is located on the pivotal axis P. The reinforcing arm 18 has a rear end thereof connected to the back stay 15. More particularly, the rear end of the reinforcing arm 18 is fastened together with the rear footrest stay 16 to the back stay 15 in the connecting position M4.

Fig. 3 shows the side cover 31 in a dotted line. In the side view, as seen in the figure, part of the side cover 31 overlaps the first area A. That is, the side cover 31 is disposed in a position having part of the side cover 31 overlapping the first area A in the side view.

### 3. Members installed in first area A - battery and tool compartment

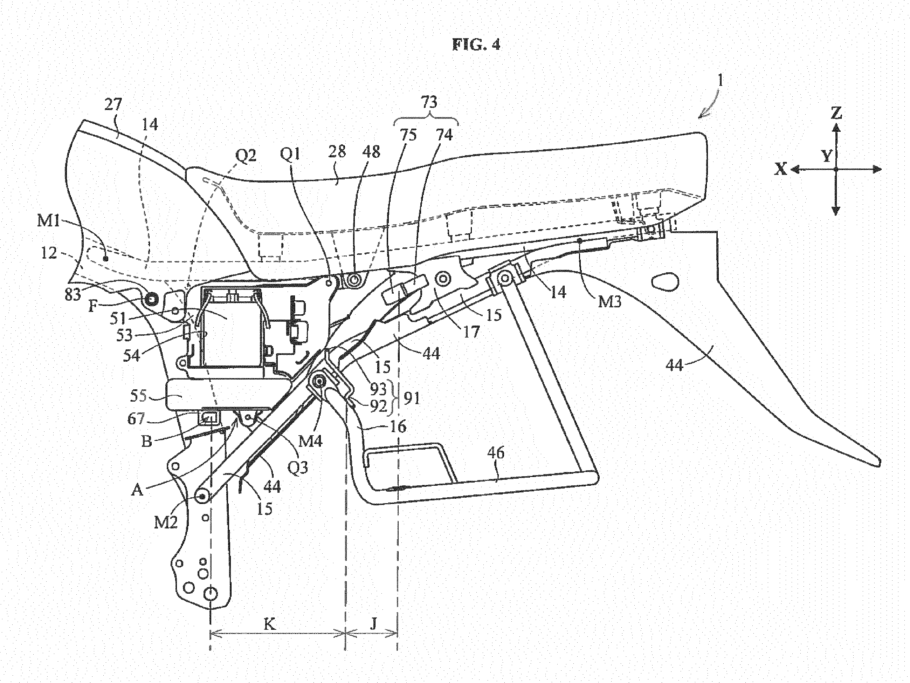

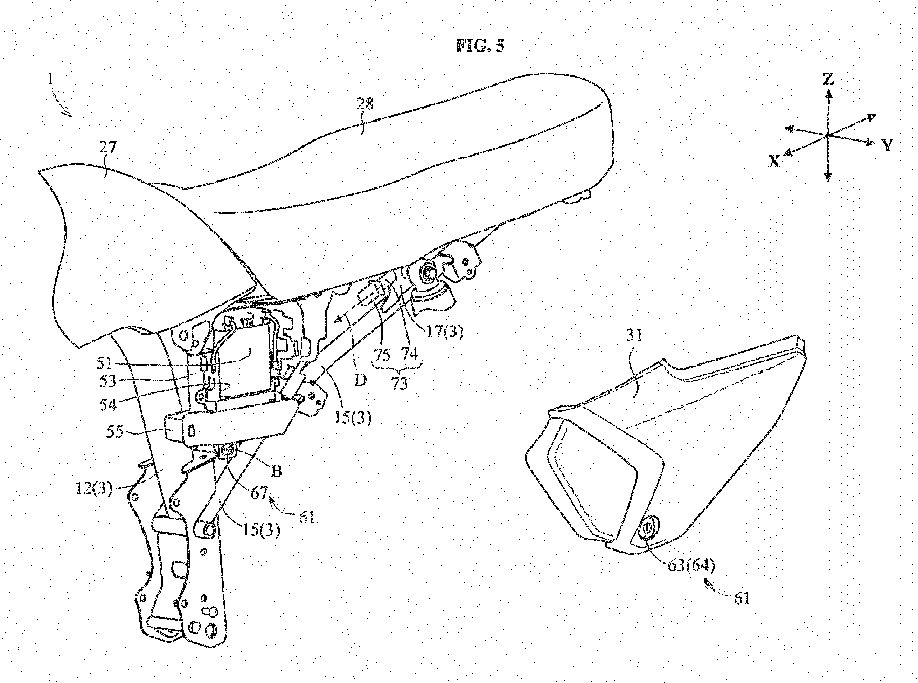

Fig. 4 is a side view showing part of the left side of the straddled vehicle 1. Fig. 5 is a perspective view showing part of the left side of the straddled vehicle 1. Fig. 4 omits illustration of the side cover 31. Fig. 5 shows a state where the side cover 31 has been removed from the frame 3.

The straddled vehicle 1 includes the battery 51 and a battery box 53. The battery 51 stores electric power and supplies power to the loads on board the straddled vehicle 1. The battery box 53 holds the battery 51. The battery box 53 is supported in positions Q1 and Q2 by the seat frame 14, and in a position Q3 by the back stay 15. The positions Q1 and Q2 are located, in the side view, rearward of the connecting position M1 and forward of the connecting position M3. The position Q3 is located, in the side view, rearward of the connecting position M2 and forward of the connecting position M3. The battery box 53 has a battery space 54 for accommodating the battery 51. The battery 51 is placed in the battery space 54. The battery 51 is held in the battery space 54. Consequently, the battery 51 is indirectly supported by the frame 3.

The straddled vehicle 1 further includes the tool compartment 55. The tool compartment 55 stores tools for servicing and checking the straddled vehicle 1. The tool compartment 55 is disposed below the battery 51. In this embodiment, the tool compartment 55 is formed integral with the battery box 53. The material for the battery box 53 is a synthetic resin, for example. The battery box 53 is an example of the battery holder in this invention.

### 4. Layout

An arrangement of the above-noted members 3, 26, 27, 28, 31, 51 and 55 will be described with reference to Fig. 1.

The engine 26 is disposed forward of the first area A. The fuel tank 27 is disposed in a position higher than the engine 26. In the side view, the engine 26 and fuel tank 27 are arranged in the up-down direction Z.

The seat 28 is disposed in a position substantially higher than the first area A. The seat 28 is disposed rearward of the engine 26. The seat 28 is disposed in a position higher than the engine 26. The seat 28 is disposed rearward of the fuel tank 27. The seat 28 and fuel tank 27 are arranged substantially at the same height. The seat 28 and fuel tank 27 are arranged in the longitudinal direction X. In the side view, the front of the seat 28 adjoins the rear of the fuel tank 27.

In the side view, the battery 51 is disposed in a position overlapping the first area A. In the side view, the tool compartment 55 is disposed in a position partly overlapping the first area A. The battery 51 and tool compartment 55 are arranged rearward of the engine 26. The battery 51 and tool compartment 55 are arranged in positions lower than the seat 28.

The side cover 31 is disposed rearward of the engine 26. The side cover 31 is disposed in a position substantially lower than the seat 28. In the side view, the seat 28 and side cover 31 are arranged in the up-down direction Z. The side cover 31 extends further forward than the seat 28. In the side view, a rear portion of an upper part of the side cover 31 adjoins a lower part of the seat 28. In the side view, a front portion of an upper part of the side cover 31 adjoins a lower portion of the fuel tank 27.

The side cover 31, when seen laterally of the straddled vehicle 1, overlaps the whole battery 51 in the first area A. In the side view, the side cover 31 covers the whole battery 51. The battery 51 is hidden by the side cover 31 in the side view. That is, the battery 51 is invisible in the side view. For expediency, Fig. 1 shows the battery 51 in a dotted line.

The side cover 31, when seen laterally of the straddled vehicle 1, overlaps part of the tool compartment 55 in the first area A. Without regard to the first area A, the side cover 31 overlaps the whole tool compartment 55 in the side view. In the side view, the side cover 31 covers the whole tool compartment 55. The tool compartment 55 is hidden by the side cover 31 in the side view. That is, in the side view, the tool compartment 55 is not visible. For expediency, Fig. 1 shows the tool compartment 55 in a dotted line.

### 5. Mounting structure for seat 28

Reference is made to Fig. 4. The seat 28 is mounted on the seat frame 14. The seat 28 is fixed to the seat frame 14 with a bolt 48. The straddled vehicle 1 includes no mechanism for locking the seat 28 to the seat frame 14. Unless at least the bolt 48 is removed, the seat 28 cannot be detached from the seat frame 14.

### 6. Mounting structure for side cover 31

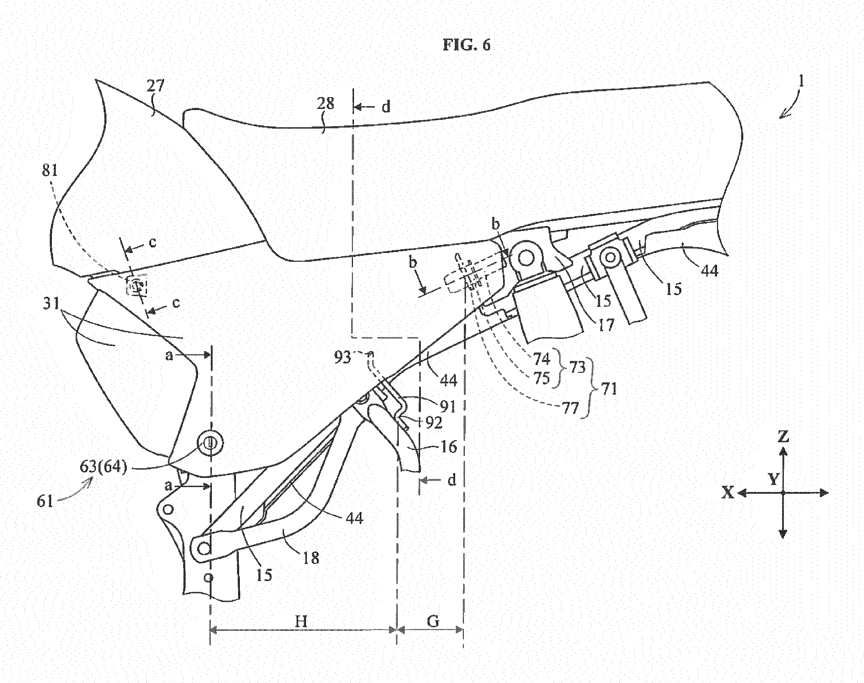

Fig. 6 is a side view showing part of the left side of the straddled vehicle 1. The straddled vehicle 1 includes a key mechanism 61, a junction member 71, and a clamp 81. The side cover 31 is detachably attached to the frame 3 by the key mechanism 61, junction member 71, and clamp 81.

In the side view, the junction member 71 is located higher than the key mechanism 61 and rearward of the key mechanism 61. In the side view, the clamp 81 is located higher than the key mechanism 61 and forward of the key mechanism 61. In the side view, the junction member 71 is located at substantially the same height as the clamp 81 and rearward of the clamp 81. The key mechanism 61, junction member 71, and clamp 81 will be described in order hereinafter.

The key mechanism 61 has a lock 63. The lock 63 is attached to the side cover 31. The lock 63 is operable by a key inserted in the lock 63. The lock 63 (key mechanism 61) is operable by the key to removably fix the side cover 31 to the frame 3.

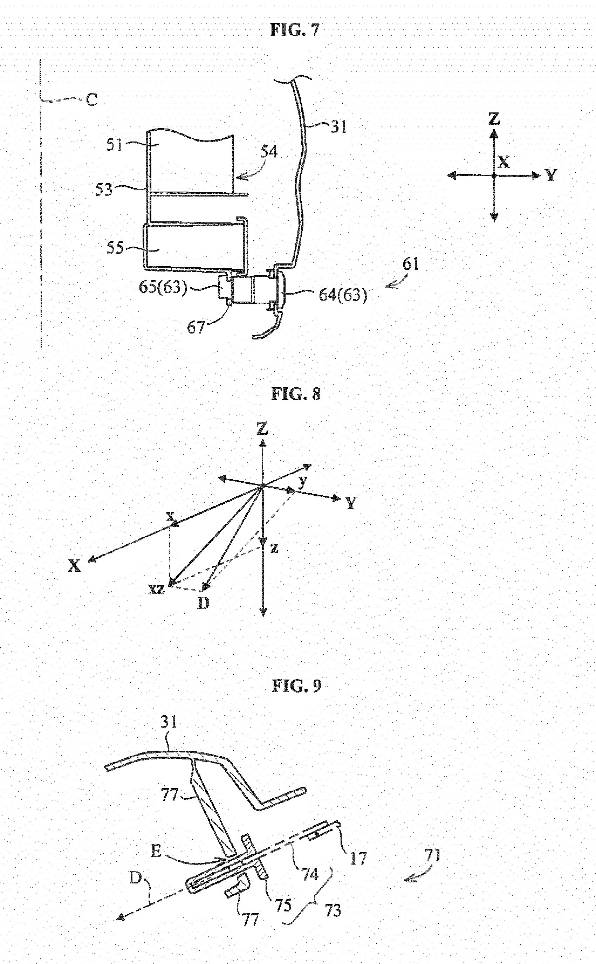

Fig. 7 is a section taken on line a-a of Fig. 6. The lock 63 has a key insert 64 and a rotating piece 65. The key insert 64 is fixed to the side cover 31. The rotating piece 65 is connected to the key insert 64. The rotating piece 65 is substantially L-shaped. In response to operation of the key inserted in the key insert 64, the rotating piece 65 rotates about the transverse direction Y relative to the key insert 64. Consequently, the rotating piece 65 is movable between a lock position and an unlock position.

Reference is made to Figs. 4 and 5. The key mechanism 61 further includes a receiver 67 for joining with the lock 63. The receiver 67 is also called a strike. The receiver 67 has a bore B for receiving the rotating piece 65.

The receiver 67 is supported by the battery box 53. More particularly, the receiver 67 is formed integral with the battery box 53. Consequently, the receiver 67 is indirectly fixed to the seat frame 14 and back stay 15. That is, the receiver 67 is fixed to the frame 3. The material for the receiver 67 is a synthetic resin, for example.

In Fig. 7, the lock 63 and receiver 67 are joined together. That is, the rotating piece 65 is inserted in the bore B and is in the lock position. When the lock 63 and receiver 67 are joined together, the rotating piece 65 cannot disengage from the bore B, the lock 63 is prohibited from moving relative to the receiver 67, and the side cover 31 is fixed to the frame 3 by the key mechanism 61 (lock 63). Thus, the side cover 31 and frame 3 are fixed indirectly through the key mechanism 61 (lock 63).

When canceling the connection of the lock 63 and receiver 67, the key is inserted in the key insert 64 to move the rotating piece 65 from the lock position to the unlock position. Then, the side cover 31 is pulled outward in the transverse direction Y. Consequently, the rotating piece 65 disengages from the bore B, and the lock 63 separates from the receiver 67, thereby canceling the fixation by the lock 63 of the side cover 31 and frame 3.

Incidentally, as shown in Fig. 7, the side cover 31 is disposed outward in the transverse direction Y of the battery 51. Similarly, the side cover 31 is disposed outward in the transverse direction Y of the tool compartment 55.

The junction member 71 will be described. The junction member 71 detachably joins the side cover 31 to the frame 3. More particularly, the junction member 71 joins the side cover 31 to the frame 3 in such a way that the junction of the side cover 31 and frame 3 by the junction member 71 will not be broken by a force in the transverse direction Y applied to the junction member 71.

Reference is made to Figs. 4 and 5. The junction member 71 includes a first member 73 fixed to the frame 3. The first member 73 has a metal plate 74 and a projection 75. The metal plate 74 has a proximal end portion thereof fixed to the bracket 17. The projection 75 is attached to a distal end of the metal plate 74. The projection 75 has an elongate flat shape. The projection 75 extends in a first direction D (see Fig. 5). The material for the projection 75 is a synthetic resin, for example.

The first direction D will be described with reference to Fig. 8. The first direction D is made up of a first component y in the transverse direction Y, and a second component xz perpendicular to the transverse direction Y and larger than the first component y. Here, the first component y may be zero but need not be zero. The second component xz is a resultant of a component x in the longitudinal direction X and a component z in the up-down direction Z. Since the second component xz is larger than the first component y, the angle formed between the first direction D and transverse direction Y is larger than 45 degrees and smaller than 135 degrees. In other words, since the second component xz is larger than the first component y, the angle of the first direction D to a plane vertical to the transverse direction Y is smaller than 45 degrees.

The first direction D may extend in any direction, e.g. forward, rearward, upward, or downward. Otherwise, the first direction D may extend in any direction such as forward and upward, forward and downward, rearward and upward, or rearward and downward. Further, the first direction D may gently slope inward or outward in the transverse direction Y, or may not slope in the transverse direction Y.

Fig. 9 is a section taken on line b-b of Fig. 6. The junction member 71 includes a second member 77 unitable with the first member 73. The second member 77 is fixed to the side cover 31. The second member 77 is attached to an inner surface of the side cover 31. The second member 77 is formed integral with the side cover 31. The second member 77 has a bore E formed therein for receiving the projection 75.

When the second member 77 moves in the first direction D relative to the first member 73, the second member 77 engages with and disengages from the first member 73. More particularly, when the second member 77 moves along the first direction D toward the first member 73, the projection 75 is inserted into the bore E, thereby joining the first member 73 and second member 77 together. Consequently, the side cover 31 is joined to the frame 3 by the junction member 71. That is, the side cover 31 and frame 3 are indirectly joined through the junction member 71. On the other hand, when the second member 77 moves along the first direction D away from the first member 73, the projection 75 leaves the bore E, thereby separating the second member 77 from the first member 73. Consequently, the junction of the side cover 31 and frame 3 by the junction member 71 is canceled.

When the first member 73 and second member 77 are joined together, the second member 77 is slidable in the first direction D relative to the first member 73. That is, when the junction member 71 joins the side cover 31 to the frame 3, the junction member 71 permits the side cover 31 to slide in the first direction D relative to the frame 3.

However, when the first member 73 and second member 77 are joined together, the second member 77 is immovable in the transverse direction Y relative to the first member 73. It is because the second component xz of the first direction D is larger than the first component y of the first direction D. Therefore, when the junction member 71 joins the side cover 31 to the frame 3, the junction member 71 prohibits the side cover 31 from moving in the transverse direction Y relative to the frame 3. Even when, for example, a force in the transverse direction Y is applied to a portion of the side cover 31 near the junction member 71, the junction of the side cover 31 and frame 3 by the junction member 71 is maintained, and the junction member 71 inhibits bending and warping of the side cover 31.

The clamp 81 will be described. The clamp 81 detachably joins the side cover 31 to the frame 3. More particularly, the clamp 81 joins the side cover 31 to the frame 3 in such a way that a force in the transverse direction Y applied to the clamp 81 will break the junction between the side cover 31 and frame 3 by the clamp 81.

Reference is made to Fig. 4. The clamp 81 has a grommet 83 fixed to the frame 3. In this embodiment the grommet 83 is supported by the fuel tank 27. Strictly, the fuel tank 27 has a fuel tank body and a fuel tank cover covering the fuel tank body, and the grommet 83 is attached to a bore formed in the fuel tank cover. Since the fuel tank 27 is supported by the frame 3 (more particularly, by the main frame 12), the grommet 83 is fixed to the frame 3 through the fuel tank 27. The grommet 83 is annular in shape with a bore F in the center. The material for the grommet 83 is rubber, for example. The grommet 83 is elastically deformable. The grommet 83 is also called bushing.

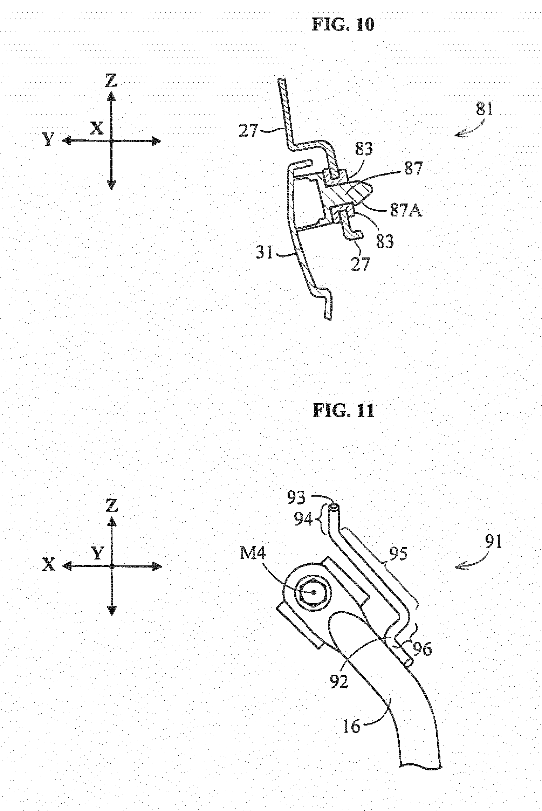

Fig. 10 is a section taken on line c-c of Fig. 6. The clamp 81 has a pin member 87 unitable with the grommet 83. The pin member 87 is fixed to the side cover 31. The pin member 87 is formed integral with the side cover 31. The pin member 87 is attached to the inner surface of the side cover 31. The pin member 87 projects inward in the transverse direction Y from the side cover 31. The pin member 87 has a barb (lug) 87A formed at a tip thereof.

By applying a slight force to the pin member 87, the pin member 87 is attached to or detached from the grommet 83. More particularly, by pressing the pin member 87 on the grommet 83, the grommet 83 is elastically deformed to insert the barb 87A into the bore F of the grommet 83, thereby joining the pin member 87 and grommet 83 together. Consequently, the side cover 31 is joined to the frame 3 by the clamp 81. That is, the side cover 31 and frame 3 are indirectly joined through the clamp 81. On the other hand, by pulling the pin member 87 from the grommet 83, the grommet 83 is elastically deformed to disengage the barb 87A from the bore F of the grommet 83 and separate the pin member 87 from the grommet 83. Consequently, the junction of the side cover 31 and frame 3 by the clamp 81 is canceled. The clamp 81 attaches and detaches the side cover 31 to/from the frame 3 by pushing and pulling in the transverse direction Y a portion of the side cover 31 (e.g. a front portion of the side cover 31) near the clamp 81.

The above is the mounting structure for the side cover 31. When detaching the side cover 31 from the frame 3, the junctions by the key mechanism 61, junction member 71, and clamp 81 are canceled, respectively, and the side cover 31 is detached from the frame 3. For example, the rotating piece 65 of the lock 63 is first moved to the unlock position. Then, the front portion of the side cover 31 is moved outward in the transverse direction Y to disengage the key mechanism 61 and clamp 81. Finally, the side cover 31 is moved in the first direction D to remove the junction member 71. Consequently, the side cover 31 can be detached from the frame 3. With the side cover 31 separated from the frame 3, access can be made to the battery 51 and tool compartment 55. Conversely, when attaching the side cover 31 to the frame 3, the side cover 31 is joined to the frame 3 at the three points provided by the key mechanism 61, junction member 71, and clamp 81.

### 7. Hook

Reference is made to Fig. 6. The straddled vehicle 1 includes a hook 91. The hook 91 is a member for hanging a helmet or other objects. The hook 91 may be used to hang the helmet, and may be used to hold objects other than the helmet.

The hook 91 is supported by the frame 3. More particularly, the hook 91 has a bottom 92 thereof connected to the rear footrest stay 16. The hook 91 is thinner than the rear footrest stay 16. The bottom 92 of the hook 91 is located in a position lower than the side cover 31. In the side view, the bottom 92 of the hook 91 does not overlap the side cover 31. In the side view, the bottom 92 of the hook 91 is located below and clear of the side cover 31. In the side view, the bottom 92 of the hook 91 is not covered by the side cover 31. In other words, the bottom 92 of the hook 91 is not hidden by the side cover 31 in the side view. In the side view, the bottom 92 of the hook 91 is visible.

The hook 91 extends upward from the rear footrest stay 16. The hook 91 has an upper end 93. The upper end 93 is located higher than the bottom 92. The upper end 93 is spaced away from the rear footrest stay 16. The hook 91 is opened upward at the upper end 93 thereof. The upper end 93 of the hook 91 is inserted inward in the transverse direction Y of the side cover 31. In the side view, the upper end 93 of the hook 91 overlaps the side cover 31. In the side view, the upper end 93 of the hook 91 is covered by the side cover 31. In other words, the upper end 93 of the hook 91 is hidden by the side cover 31 in the side view. In the side view, the upper end 93 of the hook 91 is invisible.

In the side view, the hook 91 is located in a position closer to the junction member 71 than to the lock 63. More particularly, an interval G in the longitudinal direction X between the hook 91 and junction member 71 is shorter than an interval H in the longitudinal direction X between the hook 91 and lock 63.

Reference is made to Fig. 4. The hook 91 is in the side view located in a position closer to the first member 73 than to the receiver 67. More particularly, an interval J in the longitudinal direction X between the hook 91 and first member 73 is shorter than an interval K in the longitudinal direction X between the hook 91 and receiver 67.

The intervals G, H, J, and K are defined by regarding the bottom 92 of the hook 91 as the position of the hook 91.

The hook 91 will be described in greater detail hereinafter. Reference is made to Fig. 11. Fig. 11 is a detailed side view of the hook 91.

The hook 91 is a rod object having undergone a bending process, and includes three linear parts. Here, the three parts are called, in order from the upper end 93 to the bottom 92, "first part 94", "second part 95", and "third part 96". The first part 94 includes the upper end 93. The third part 96 includes the bottom 92.

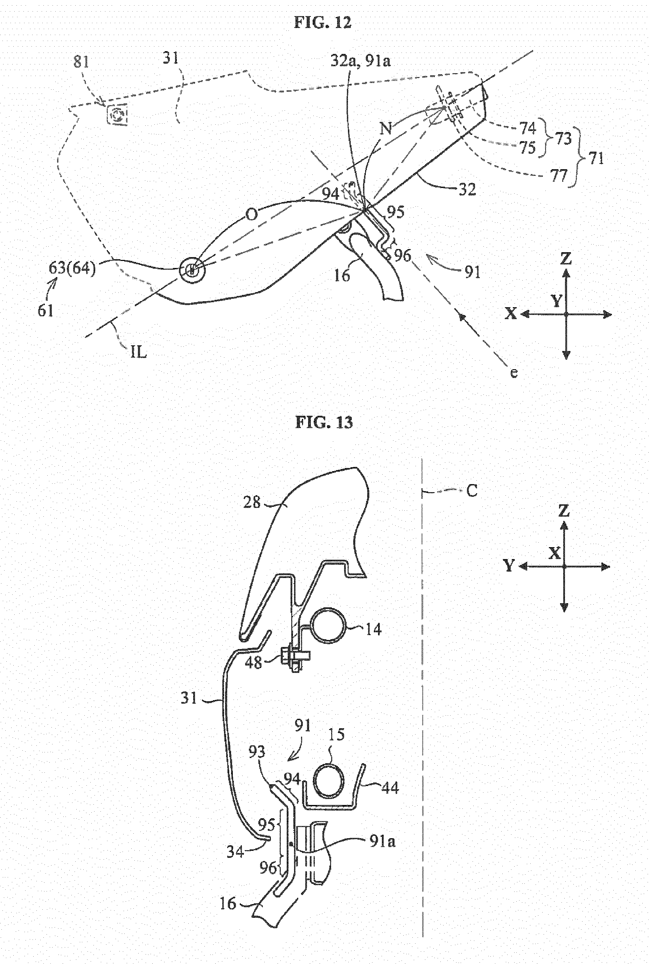

Reference is made to Fig. 12. Fig. 12 is a detailed side view of the hook 91 and side cover 31. In the side view, the side cover 31 has a first edge portion 32 which follows an imaginary line IL linking the lock 63 and junction member 71. In other words, in the side view, the side cover 31 has a first edge portion 32 extending along the direction of an imaginary line IL linking the lock 63 and junction member 71. For expediency, Fig. 12 shows the first edge portion 32 in a solid line, and other edge portions of the side cover 31 in a dotted line. The first edge portion 32 is a lower edge of the side cover 31.

In the side view, the second part 95 intersects the first edge portion 32. The second part 95 inclines forward as it extends upward, and the first edge portion 32 inclines to be higher as it extends rearward. In the side view, therefore, the second part 95 intersects the first edge portion 32 substantially at right angles.

Here, the site of the first edge portion 32 which intersects the hook 91 in the side view is called "intersection 32a". The site of the hook 91 which intersects the first edge portion 32 in the side view is called "intersection 91a". In the side view, the intersection 32a of the first edge portion 32 and the intersection 91a of the hook 91 overlap each other. The intersection 32a and intersection 91a are not in contact with each other, but are spaced from each other in the transverse direction Y. The intersection 91a is included in the second part 95.

In the side view, the intersection 91a of the hook 91 is located in a position closer to the junction member 71 than to the lock 63. More particularly, in the side view, a distance N between the intersection 91a and junction member 71 is shorter than a distance O between the intersection 91a and lock 63. Strictly, the distance N is a linear distance between the intersection 91a and junction member 71 in the side view, and distance O is a linear distance between the intersection 91a and lock 63 in the side view. The intersection 91a of the hook 91 is located in a position in the side view closer to the first member 73 than to the receiver 67 (Fig. 12 omits illustration of the receiver 67). More particularly, in the side view, the distance between the intersection 91a and first member 73 is shorter than the distance between the intersection 91a and receiver 67.

Since the intersection 32a of the first edge portion 32 is in the same position in the side view as the intersection 91a of the hook 91, the distance N corresponds to the distance in the side view between the intersection 32a of the first edge portion 32 and the junction member 71. The distance O corresponds to the distance in the side view between the intersection 32a of the first edge portion 32 and the lock 63. It can therefore be said that, in the side view, the intersection 32a of the first edge portion 32 is located in a position closer to the junction member 71 than to the lock 63.

The third part 96 is located in a position lower than the first edge portion 32. In the side view, the whole third part 96 does not overlap the side cover 31. In the side view, the third part 96 inclines rearward as it extends upward. In the side view, therefore, the third part 96 extends in a direction substantially perpendicular to the rear footrest stay 16.

The first part 94 is located in a position higher than the first edge portion 32. In the side view, therefore, the whole first part 94 overlaps the side cover 31. The upper end 93 of the hook 91 is also located in a position higher than the first edge portion 32.

Fig. 13 is a section taken on line d-d of Fig. 6. The first part 94 is located inward of the side cover 31. The first part 94 inclines outward in the transverse direction Y as it extends upward. This inclination continues up to the upper end 93 of the hook 91.

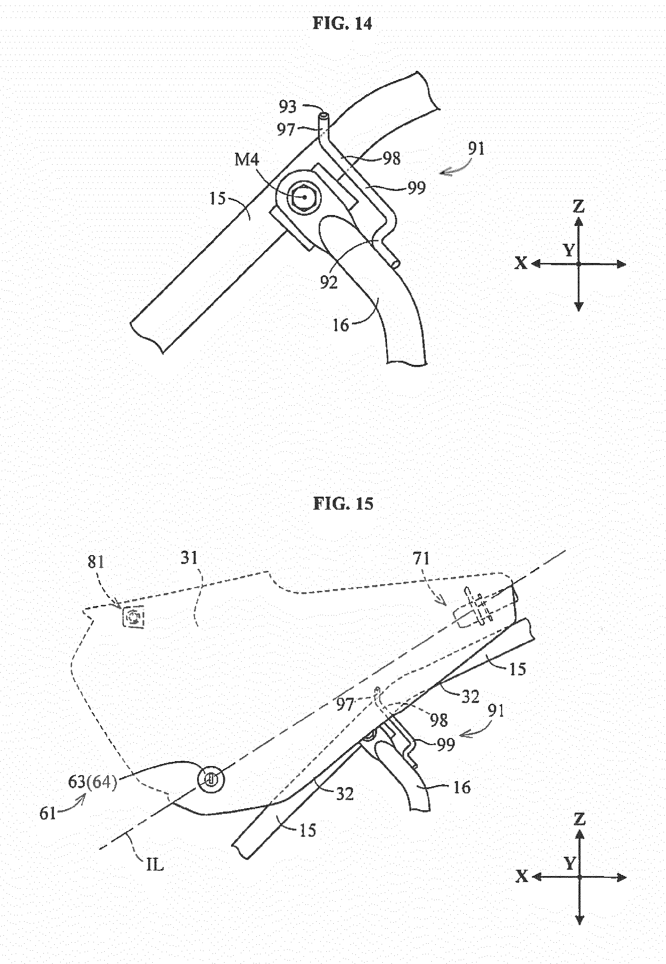

The hook 91 can also be described from the following viewpoint. Fig. 14 is a detailed side view of the hook 91 and back stay 15.

A portion of the hook 91 located above the back stay 15 in the side view is called "upper part 97", a portion of the hook 91 which overlaps the back stay 15 is called "overlapping part 98", and a portion of the hook 91 located below the back stay 15 is called "lower part 99". The upper part 97 includes the upper end 93. The lower part 99 includes the bottom 92. The hook 91 is thinner than the back stay 15.

Reference is made to Fig. 15. Fig. 15 is a detailed side view of the hook 91, back stay 15, and side cover 31. For expediency, Fig. 15 shows the first edge portion 32 in a solid line, and the other edge portions of the side cover 31 in a dotted line.

In the side view, the first edge portion 32 intersects one or both of the overlapping part 98 and lower part 99. In other words, in the side view, the hook 91 has at least one of the overlapping part 98 and lower part 99 intersecting the first edge portion 32. The whole upper part 97 is located in a position higher than the first edge portion 32. That is, in the side view, the upper part 97 overlaps the side cover 31. At least part of the lower part 99 does not overlap the side cover 31.

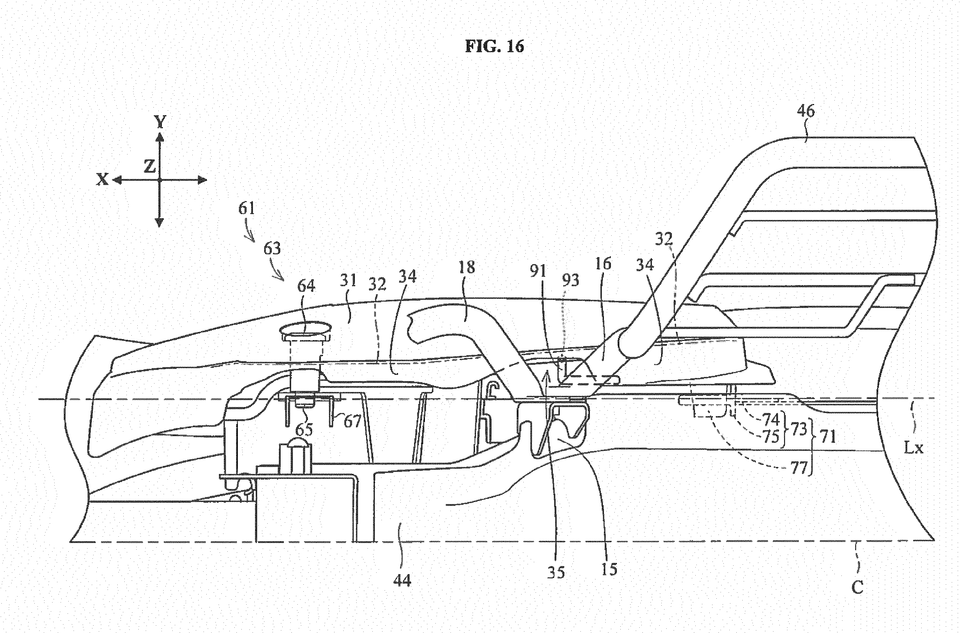

Reference is made to Fig. 16. Fig. 16 is a bottom view of the side cover 31 and hook 91. The side cover 31 has a turnback 34 and a cutout 35. The turnback 34 is formed on the bottom of the side cover 31. The turnback 34 extends inward in the transverse direction Y from the first edge portion 32. Fig. 16 schematically shows an approximate position of the first edge portion 32 in a two-dot chain line. The cutout 35 is formed in the turnback 34. The cutout 35 is formed near the hook 91. The hook 91 (more particularly, the second part 95) passes through the cutout 35.

In the bottom view, the upper end 93 of the hook 91 overlaps the side cover 31 (tumback 34). In the bottom view of Fig. 16, the upper end 93 of the hook 91 is located on an edge of the cutout 35. The upper end 93 of the hook 91 is located in a position higher than the turnback 34.

Incidentally, Fig. 16 also explicitly shows a characteristic arrangement of the key mechanism 61 (lock 63) and junction member 71. That is, in the bottom view, the key mechanism 61 (lock 63) and junction member 71 are located on the same straight line Lx parallel to the longitudinal direction X. The straight line Lx is an imaginary line.

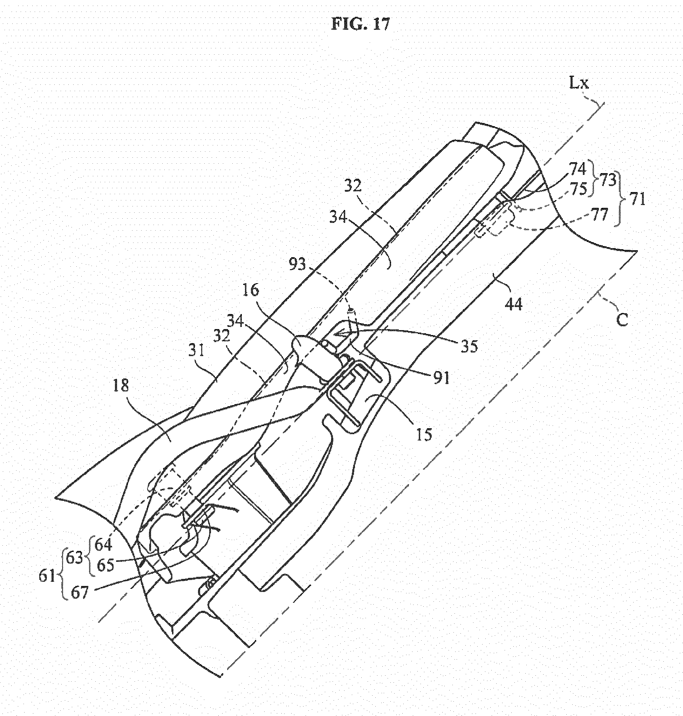

Reference is made to Fig. 17. Fig. 17 is a perspective view of the side cover 31 and hook 91 seen from an obliquely downward direction. More particularly, Fig. 17 is a view of the side cover 31 and hook 91 seen when looked up from the direction in which the hook 91 is inserted inward of the side cover 31. In this embodiment, the direction in which the hook 91 is inserted inward of the side cover 31 is an axial direction of the second part 95, which is direction e shown in Fig. 12.

When seen from the direction in which the hook 91 is inserted inward of the side cover 31 as shown in Fig. 17, the upper end 93 of the hook 91 overlaps the side cover 31 (turnback 34).

### 8. Example of how the hook is used

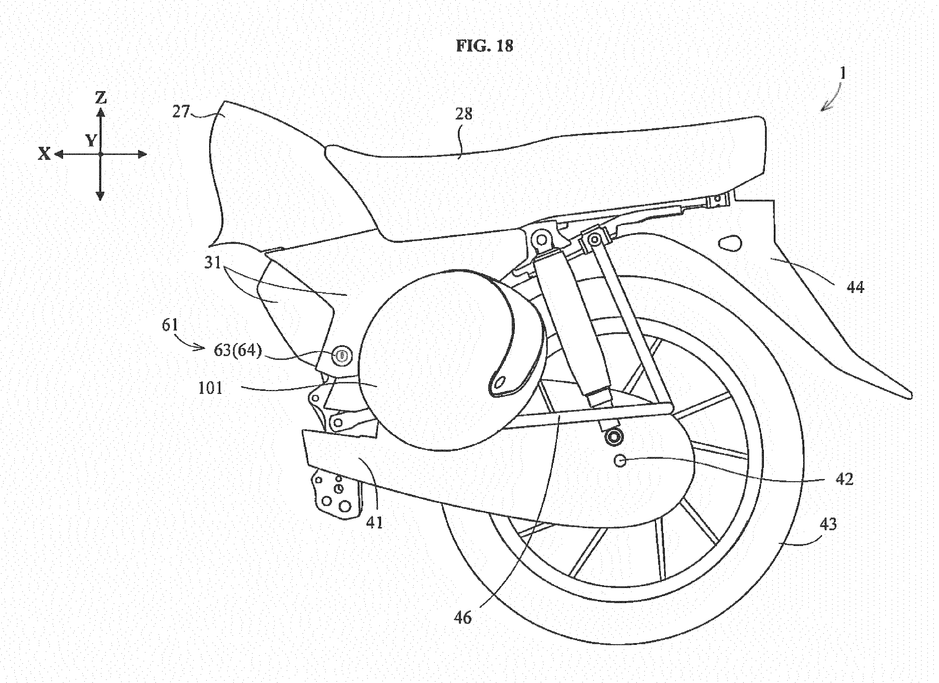

Fig. 18 is a side view showing part of the left side of the straddled vehicle 1 holding a helmet. A helmet 101 is hung on the hook 91. In the side view, the lock 63 does not overlap the helmet 101. That is, even when the helmet 101 is hung on the hook 91, the lock 63 is visible in the side view. The helmet 101 hung on the hook 91 is spaced apart from the lock 63 enough to facilitate operation of the lock 63.

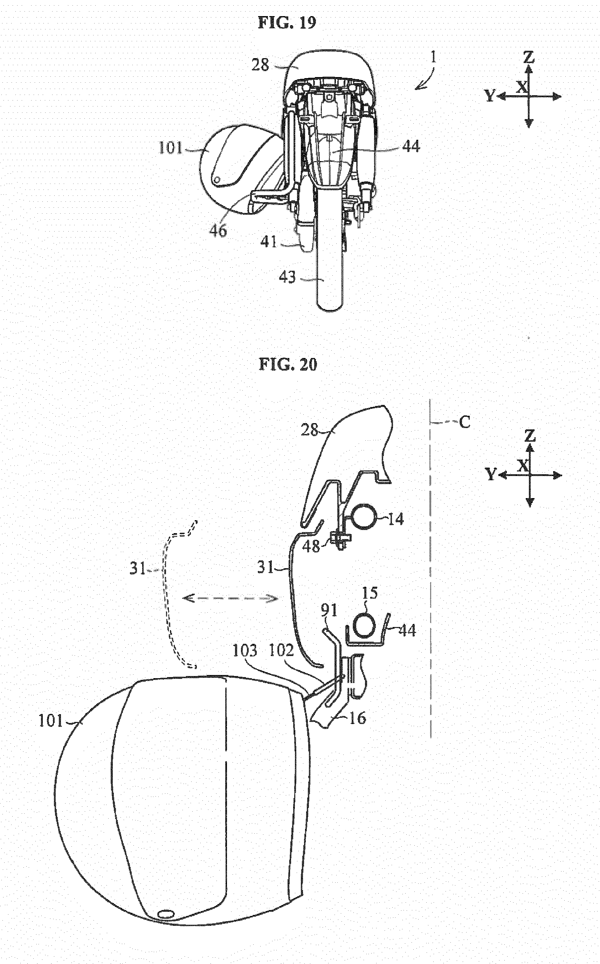

Reference is made to Figs. 19 and 20. Fig. 19 is a rear view of the straddled vehicle 1 holding the helmet. Fig. 20 is a sectional view of the hook, helmet, and side cover. Fig. 20 is a view showing the helmet 101 hung on the hook 91, as added to the sectional view of Fig. 13.

As shown in Fig. 20, a ring 102 is attached to the helmet 101 through a relatively short string 103. The helmet 101 is hung by putting the ring 102 on the hook 91. The ring 102 put on the hook 91 falls to near the bottom 92 of the hook 91. The helmet 101 is held at a height corresponding to or below the bottom 92. The helmet 101 therefore does not interfere with the side cover 31. For example, even when the helmet 101 is hung on the hook 91, the side cover 31 can be attached to the frame 3 without difficulty, and can be detached from the frame 3 without difficulty. Fig. 20 shows the side cover 31 attached to the frame 3 in solid lines, and the side cover 31 detached from the frame 3 in dotted lines.

Thus, the straddled vehicle 1 in the embodiment, with the seat 28 fastened to the seat frame 14 with the bolt 48, can simplify the mounting structure for the seat 28. Since the straddled vehicle 1 includes no mechanism for locking the seat 28 to the frame 3, the mounting structure for the seat 28 can be further simplified. These features can hold down manufacturing cost of the straddled vehicle 1.

The straddled vehicle 1 with the hook 91 can easily hold the helmet 101 or other objects.

The straddled vehicle 1 includes the side cover 31, and the upper end 93 of the hook 91 overlaps the side cover 31 as seen from a side. This construction can prevent theft of the helmet 101 or other objects hung on the hook 91. That is, the straddled vehicle 1 can safely keep the helmet 101 or other objects.

The straddled vehicle 1 with the lock 63 and junction member 71 allows the side cover 31 easily to be attached to and detached from the frame 3. By detaching the side cover 31 from the frame 3, the helmet 101 or other objects can easily be hung on the hook 91, and the helmet 101 or other objects hung on the hook 91 can easily be removed. Thus, the straddled vehicle 1 can hold the helmet 101 or other objects easily.

The lock 63, which cannot be opened without the key, can further prevent theft of the helmet 101 or other objects.

The junction member 71, with the first member 73 and second member 77, can conveniently join the side cover 31 to the frame 3.

Especially, the junction member 71 joins the side cover 31 to the frame 3 in a way that the side cover 31 is slidable in the first direction D relative to the frame 3. Since the first direction D is made up of the first component y and the second component xz larger than the first component y, when the junction member 71 joins the side cover 31 to the frame 3, the junction member 71 can conveniently prohibit the side cover 31 from moving in the transverse direction Y relative to the frame 3. Consequently, when the junction member 71 joins the side cover 31 to the frame 3, the junction member 71 can conveniently prevent the side cover 31 from coming off the frame 3 against a force pulling the portion of the side cover 31 near the junction member 71 in the transverse direction Y. In other words, when the junction member 71 joins the side cover 31 to the frame 3, even if a force in the transverse direction Y is applied to the side cover 31, the junction member 71 can firmly maintain the jointed state of the side cover 31 and frame 3. Further, when the junction member 71 joins the side cover 31 to the frame 3, the junction member 71 can conveniently inhibit bending and warping of the side cover 31. This can prevent theft of the helmet 101 or other objects with increased effect.

The second member 77 joins with and separates from the first member 73 by moving in the first direction D relative to the first member 73. With such construction of the junction member 71, the first member 73 and second member 77 join together and separate from each other when the side cover 31 moves in the first direction D relative to the frame 3. In other words, with the side cover 31 moving in the first direction D relative to the frame 3, the side cover 31 and frame 3 are joined by the junction member 71, and the junction by the junction member 71 is canceled. Since the direction of attachment and detachment of the side cover 31 and frame 3 is the same as the first direction D (that is, the sliding direction of the side cover 31 relative to the frame 3), the junction member 71 can attach and detach the side cover 31 to/from the frame 3 with increased ease.

Since the hook 91 is disposed in the position closer to the junction member 71 than to the lock 63 in a side view, there is no possibility that the helmet 101 or other objects hung on the hook 91 will obstruct the key operation on the lock 63.

The hook 91 has the intersection 91a which intersects the first edge portion 32 in the side view, and the intersection 91a is located in the position closer to the junction member 71 than to the lock 63 in the side view. There is thus no possibility that the helmet 101 or other objects hung on the hook 91 will obstruct the key operation on the lock 63. In other words, the first edge portion 32 has the intersection 32a which intersects the hook 91 in the side view, and the intersection 32a is located in the position closer to the junction member 71 than to the lock 63 in the side view. There is thus no possibility that the helmet 101 or other objects hung on the hook 91 will obstruct the key operation on the lock 63.

The bottom 92 of the hook 91 does not overlap the side cover 31 in the side view. That is, the bottom 92 of the hook 91 is located in the position lower than the side cover 31. Therefore, the helmet 101 or other objects hung on the hook 91 will not obstruct attachment of the side cover 31 to the frame 3.

Incidentally, in a comparative example in which a hook is disposed to have the bottom thereof overlap the side cover 31 in the side view, there is a possibility that a helmet or other objects may be hung in the mounting position of the side cover 31. That is, in the comparative example, there is a possibility that the helmet or other objects hung on the hook may interfere with the side cover 31 attached to the frame 3. In this case, the helmet or other objects is/are obstructive so that the side cover 31 cannot be attached to the frame 3 properly.

The side cover 31 as seen from a side is disposed in the position overlapping the first area A, and the side cover 31 as seen from the side overlaps the battery 51 and tool compartment 55 in the first area A. As is clear from these arrangements, the primary role of the side cover 31 is to cover and expose the battery 51 and tool compartment 55 easily. According to this embodiment, by using the side cover 31 having such a primary function, the helmet 101 or other objects hung on the hook 91 can be safely kept with the simple construction.

Since the hook 91 is disposed in the position closer to the first member 73 than to the receiver 67 in the side view, there is no possibility that the helmet 101 or other objects hung on the hook 91 will obstruct the key operation on the lock 63.

The hook 91 has the intersection 91a which intersects the first edge portion 32 in the side view, and the intersection 91a is located in the position closer to the first member 73 than to the receiver 67 in the side view. There is thus no possibility that the helmet 101 or other objects hung on the hook 91 will obstruct the key operation on the lock 63.

Since the first member 73 has the projection 75, and the second member 77 has the bore E, the first member 73 and second member 77 can conveniently join with each other and can conveniently separate from each other.

By fixing the first member 73 to the bracket 17, the first member 73 can conveniently be fixed to the frame 3. The second member 77 can be simplified by forming the second member 77 integral with the side cover 31.

The first edge portion 32, as seen from a side, extends along the imaginary line IL linking the lock 63 and junction member 71. Therefore, when the lock 63 fixes the side cover 31 to the frame 3 and the junction member 71 joins the side cover 31 to the frame 3, a force applied to push or pull a part near the first edge portion 32 will not easily bend or warp the first edge portion 32. Since the hook 91 intersects such first edge portion 32 as seen from the side, the helmet 101 or other objects hung on the hook 91 can be kept further safely.

Since the first edge portion 32 intersects at least either one of the overlapping part 98 and lower part 99 of the hook 91 in the side view, the whole upper part 97 of the hook 91 overlaps the side cover 31 in the side view. The straddled vehicle 1 can therefore keep the helmet 101 or other objects all the more safely.

Since the side cover 31 has the turnback 34 and cutout 35, the turnback 34 can appropriately surround the hook 91 in a bottom view. In the bottom view, therefore, the turnback 34 can easily hide the portion of the hook 91 inserted inward in the transverse direction Y of the side cover 31. Consequently, the straddled vehicle 1 can keep the helmet 101 or other objects all the more safely. Further, the turnback 34 can effectively inhibit bending of the side cover 31 (especially the first edge portion 32).

Since the upper end 93 of the hook 91 overlaps the side cover 31 in the bottom view, the straddled vehicle 1 can keep the helmet 101 or other objects all the more safely.

Since the hook 91 has the first part 94 which inclines outward in the transverse direction Y as it extends up to the upper end 93, the upper end 93 of the hook 91 can easily be covered by the side cover 31 in the bottom view. In other words, the upper end 93 of the hook 91 can easily be hidden behind the side cover 31 in the bottom view. Further, since the hook 91 has the above first part 94, the opening of the hook 91 enlarges upward. The helmet 101 or other objects can therefore be easily hung on the hook 91, and can easily be removed from the hook 91.

Since the key mechanism 61 (lock 63) and junction member 71 are located on the same straight line Lx parallel to the longitudinal direction X, stress can conveniently be prevented from concentrating on at least one of the key mechanism 61 (lock 63) and junction member 71 when attaching and detaching the side cover 31 to/from the frame 3.

Since the lock 63 is prohibited from moving relative to the receiver 67 when the lock 63 is joined with the receiver 67, the key mechanism 61 (lock 63) can firmly fix the side cover 31 to the frame 3.

The battery box 53 supporting the receiver 67 allows omission of a member dedicated to supporting the receiver 67. That is, the receiver 67 can be installed simply.

Since the material for both the battery box 53 and receiver 67 is a resin, the cost of the battery box 53 and receiver 67 can be reduced. Since the battery box 53 and receiver 67 are formed integral, the battery box 53 and receiver 67 are fixable together to the frame 3.

Since the engine 26 is disposed forward of the side cover 31 in a side view, it is possible to employ a layout peculiar to the straddled vehicle 1 which cannot be employed for a scooter type vehicle. For example, the battery 51 and tool compartment 55 can be arranged rearward of the engine 26 in the side view.

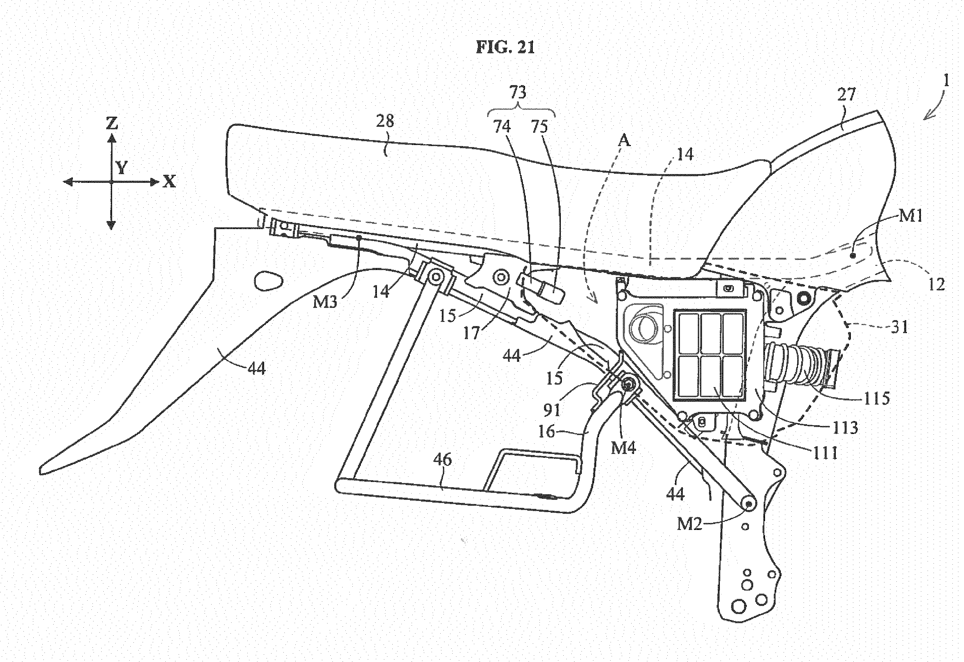

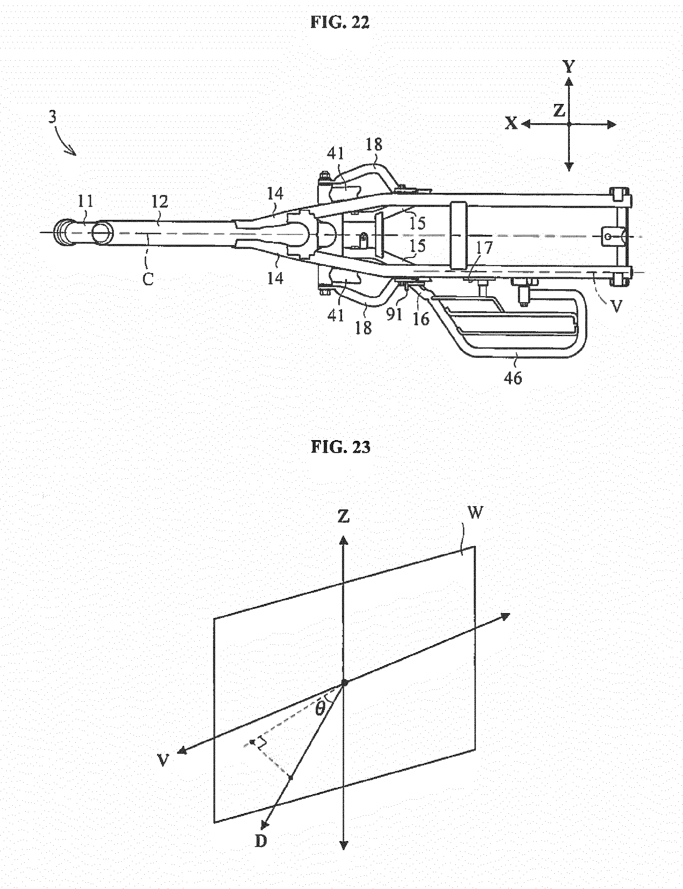

This invention is not limited to the foregoing embodiment, but may be modified as follows:
(1) In the foregoing embodiment, only part of the side cover 31 is located in the first area A in a side view. This invention is not limited to this. For example, the whole side cover 31 may be located in the first area A in the side view. That is, the whole side cover 31 may overlap the first area A in the side view.
(2) In the foregoing embodiment, when the straddled vehicle 1 is seen from the side, the side cover 31 overlaps the battery 51 and tool compartment 55 in the first area A. The invention is not limited to this. For example, when the straddled vehicle 1 is seen from the side, the side cover 31 may overlap at least one of the battery 51, tool compartment 55 and an air cleaner in the side view.
   Reference is made to Fig. 21. Fig. 21 is a side view showing part of the right side of a straddled vehicle according to a modified embodiment. Components identical to those of the foregoing embodiment are shown with the same signs, and will not particularly be described.
   A straddled vehicle 1 includes an air cleaner element 111. The air cleaner element 111 is housed in an air cleaner box 113. The air cleaner box 113 is supported by the frame 3 (e.g. the seat frame 14 and back stay 15). An intake pipe 115 is connected to the air cleaner box 113. Clean gas having passed through the air cleaner element 111 is supplied to the engine 26 (more strictly, a fuel supply system such as a carburetor and a fuel injection device) through the intake pipe 115.
   In the side view, the air cleaner element 111 overlaps the first area A. Further, in the side view, the air cleaner element 111 and side cover 31 overlap each other in the first area A. For expediency, Fig. 21 shows the side cover 31 in a dotted line. According to this modified embodiment, the air cleaner element 111 can easily be accessed by detaching the side cover 31 from the frame 3. The air cleaner element 111 is an example of the air cleaner in this invention.
(3) In the foregoing embodiment, when the straddled vehicle 1 is seen from a side, the side cover 31 overlaps the whole battery 51 in the first area A. The invention is not limited to this. For example, when the straddled vehicle 1 is seen from the side, the side cover 31 may overlap part of the battery 51 in the first area A. In the embodiment, when the straddled vehicle 1 is seen from the side, the side cover 31 overlaps part of the tool compartment 55 in the first area A. The invention is not limited to this. For example, when the straddled vehicle 1 is seen from the side, the side cover 31 may overlap the whole tool compartment 55 in the first area A. In the modified embodiment (2) described above, when the straddled vehicle 1 is seen from the side, the side cover 31 overlaps the whole air cleaner element 111 in the first area A. The invention is not limited to this. For example, when the straddled vehicle 1 is seen from the side, the side cover 31 may overlap part of the air cleaner element 111 in the first area A. In sum, when the straddled vehicle 1 is seen from a side, the side cover 31 may overlap at least part of at least one of the battery 51, tool compartment 55, and air cleaner element 111 in the first area A.
(4) In the foregoing embodiment, the whole battery 51 overlaps the first area A in the side view. The invention is not limited to this. For example, part of the battery 51 may overlap the first area A in the side view. In the embodiment, part of the tool compartment 55 overlaps the first area A in the side view. The invention is not limited to this. For example, the whole tool compartment 55 may overlap the first area A in the side view. In the modified embodiment (2) described above, the whole air cleaner element 111 overlaps the first area A in the side view. The invention is not limited to this. Part of the air cleaner element 111 may overlap the first area A in the side view.
(5) In the foregoing embodiment, the side cover 31 is disposed on the left side of the frame 3. The invention is not limited to this. As shown in Fig. 21, for example, the side cover 31 may be disposed on the right side of the frame 3. Or the side cover 31 may be disposed on each of the right side and left side of the frame 3. In accordance with the modified embodiment, the position of the hook 91 may be changed as appropriate. For example, the hook 91 may be disposed on at least the right side and left side of the frame 3.
(6) In the foregoing embodiment, the battery box 53 is supported by the seat frame 14 and back stay 15. The invention is not limited to this. The battery box 53 may be supported by other elements (e.g. the main frame 12) included in the frame 3.
(7) In the foregoing embodiment, the tool compartment 55 is formed integral with the battery box 53. The invention is not limited to this. The tool compartment 55 may consist of a member separate from the battery box 53. In this modified embodiment, the tool compartment 55 may be supported by the frame 3 through the battery box 53, or the tool compartment 55 may be directly supported by the frame 3.
(8) In the foregoing embodiment, the receiver 67 is directly supported by the battery box 53 and is indirectly supported by the frame 3. The invention is not limited to this. For example, the receiver 67 may be directly supported by the frame 3 (e.g. the main frame 12, seat frame 14, and back stay 15). For example, the frame 3 may include a bracket connected to at least one of the main frame 12, seat frame 14 and back stay 15, and the receiver 67 may be formed on this bracket. In this modified embodiment, the receiver 67 is substantially an element of the frame 3, and therefore the lock 63 is directly joined to the frame 3.
(9) In the foregoing embodiment, the receiver 67 is fixed to the seat frame 14 and back stay 15 through the battery box 53. The invention is not limited to this. For example, the receiver 67 may be fixed directly or indirectly to any one of the elements included in the frame 3. For example, the receiver 67 may be fixed to at least one of the main frame 12, seat frame 14, and back stay 15.
(10) In the foregoing embodiment, the key mechanism 61 (lock 63) fixes the side cover 31 to the seat frame 14 and back stay 15. The invention is not limited to this. The key mechanism 61 (lock 63) may fix the side cover 31 to any one of the elements included in the frame 3. For example, the key mechanism 61 (lock 63) may detachably fix the side cover 31 to at least one of the main frame 12, seat frame 14, and back stay 15.
(11) In the foregoing embodiment, the receiver 67 is formed integral with the battery box 53. The invention is not limited to this. The receiver 67 may consist of a member separate from the battery box 53.
(12) In the foregoing embodiment, the receiver 67 is form of a resin. The invention is not limited to this. For example, the receiver 67 may be formed of metal.
(13) In the foregoing embodiment, the angle formed between the first direction D and transverse direction Y is larger than 45 degrees and smaller than 135 degrees. The invention is not limited to this. For example, the first direction D may intersect the transverse direction Y at an angle larger than 60 degrees and smaller than 120 degrees. In other words, the angle of the first direction D to a plane vertical to the transverse direction Y may be less than 30 degrees. According to this, the junction member 71 can with increased reliability prohibit the side cover 31 from moving in the transverse direction Y relative to the frame 3.
   Further, the first direction D may intersect the transverse direction Y at an angle larger than 75 degrees and smaller than 105 degrees. In other words, the angle of the first direction D to a plane vertical to the transverse direction Y may be less than 15 degrees. According to this, the junction member 71 can with increased reliability prohibit the side cover 31 from moving in the transverse direction Y relative to the frame 3.
   The first direction D may extend substantially perpendicular to the transverse direction Y. In other words, the first direction D may be substantially parallel to a plane vertical to the transverse direction Y. According to this, the junction member 71 can with increased reliability prohibit the side cover 31 from moving in the transverse direction Y relative to the frame 3.
(14) In the foregoing embodiment, the first direction D is defined by the first component y and second component xz. The invention is not limited to this. For example, the first direction D may be defined by the direction of the seat frame 14.
   Reference is made to Fig. 22. Fig. 22 is a plan view of the frame 3. The extending direction of the seat frame 14 is called "axial direction V". The axial direction V may or may not be parallel to the longitudinal direction X. The axial direction V may or may not be horizontal. In this modified embodiment, the axial direction V is not constant over the entire seat frame 14. In such a case, it is preferred that the "axial direction V" is an extending direction of the portion of the seat frame 14 connected to the bracket 17. Alternatively, the "axial direction V" preferably is an extending direction of the portion of the seat frame 14 supporting the first member 73.
   Fig. 23 is an explanatory view of a first direction according to a modified embodiment. Fig. 23 shows a vertical plane W including the axial direction V of the seat frame 14. Here, a relationship between the plane W and the first direction D may be provided as follows. That is, it may be provided that angle θ of the first direction D to the vertical plane W including the axial direction V of the seat frame 14 is less than 45 degrees. In other words, it may be provided that the first direction D intersects at less than 45 degrees to the vertical plane W including the axial direction V of the seat frame 14. According to this, the first direction D can be approximated to the axial direction V of the seat frame 14. As a result, the junction member 71 can join the side cover 31 and frame 3 in a way to allow the side cover 31 to slide along the seat frame 14. The junction member 71 can therefore conveniently join the side cover 31 to the frame 3 in a position adjacent the seat frame 14.
   In this modified embodiment, the angle of the first direction D to the plane W may be changed as appropriate. For example, the angle of the first direction D to the vertical plane W including the axial direction V of the seat frame 14 may be less than 30 degrees. Or the angle of the first direction D to the vertical plane W including the axial direction V of the seat frame 14 may be less than 15 degrees. Or the first direction D may be substantially parallel to the vertical plane W including the axial direction V of the seat frame 14. According to these, the first direction D can be further approximated to the axial direction V of the seat frame 14.
(15) In the foregoing embodiment, the junction member 71 detachably joins the side cover 31 to the bracket 17. The invention is not limited to this. The junction member 71 may join the side cover 31 to any one of the elements included in the frame 3. For example, the junction member 71 may join the side cover 31 to at least either one of the seat frame 14 and back stay 15.
(16) In the foregoing embodiment, the first member 73 is fixed to the bracket 17. The invention is not limited to this. The first member 73 may be fixed to any one of the elements included in the frame 3. For example, the first member 73 may be fixed to at least either one of the seat frame 14 and back stay 15.
(17) In the foregoing embodiment, the first member 73 is directly fixed to the frame 3 (bracket 17). The invention is not limited to this. For example, the first member 73 may be indirectly fixed to the frame 3 through another member.
(18) In the foregoing embodiment, the second member 77 is formed integral with the side cover 31. The invention is not limited to this. The second member 77 may consist of a member separate from the side cover 31, and this second member 77 may be attached to the side cover 31.
(19) In the foregoing embodiment, the first member 73 has the projection 75, and the second member 77 has the bore E into which the projection 75 can be inserted. The invention is not limited to this. For example, the second member 77 may have a projection, and the first member 73 may have a bore into which the projection of the second member 77 can be inserted. Or the first member 73 and second member 77 may have projections, respectively, the first member 73 may additionally have a bore into which the projection of the second member 77 can be inserted, and the second member 77 may additionally have a bore into which the projection of the first member 73 may be inserted.
(20) In the foregoing embodiment, the straddled vehicle 1 includes the clamp 81. The invention is not limited to this. For example, the clamp 81 may be omitted and the side cover 31 may be detachably joined to the frame 3 by the key mechanism 61 (lock 63) and junction member 71.
(21) In the foregoing embodiment, the hook 91 is supported by the rear footrest stay 16. The invention is not limited to this. The hook 91 may be fixed to any one of the elements included in the frame 3. For example, the hook 91 may be supported by the back stay 15.
(22) In the foregoing embodiment, the hook 91 extends upward from the rear footrest stay 16. The invention is not limited to this. In the embodiment, the hook 91 is connected at the bottom 92 to the rear footrest stay 16. The invention is not limited to this. The shape of the hook 91 may be changed as appropriate. For example, the hook 91 may first extend downward from the rear footrest stay 16, and may then be curved to extend upward. In this modified embodiment, the part of the hook 91 connected to the rear footrest stay 16 is not the bottom 92 of the hook 91 (i.e. the lowermost part of the hook 91). For example, the curved portion where the extending direction changes from downward to upward becomes the bottom 92 of the hook 91.
(23) In the foregoing embodiment, the first part 94, second part 95, and third part 96 each have a linear shape. The invention is not limited to this. The shape of the first part 94, second part 95, and third part 96 may be changed as appropriate. For example, at least one of the first part 94, second part 95, and third part 96 may have a curved shape.
(24) In the foregoing embodiment, the upper end 93 of the hook 91 overlaps the side cover 31 in a bottom view. The invention is not limited to this. That is, the upper end 93 of the hook 91 does not need to overlap the side cover 31 in the bottom view. For example, the upper end 93 of the hook 91 may be visible in the bottom view.
(25) In the foregoing embodiment, the bottom 92 of the hook 91 serves as the reference position of the hook 91 for defining the intervals G, H, J, and K. The invention is not limited to this. For example, in the definition of intervals G, H, J. and K, any one of the bottom 92, upper end 93, first part 94, second part 95, third part 96, upper part 97, overlapping part 98, and lower part 99 of the hook 91 may be the reference position of the hook 91.
(26) In the foregoing embodiment, the straddled vehicle 1 is a two-wheeled motor vehicle. The invention is not limited to this. The straddled vehicle 1 may be changed to a three-wheeled motor vehicle. In the foregoing embodiment, the number of front wheels 24 is one. The invention is not limited to this. For example, the number of front wheels 24 may be changed to two. In the foregoing embodiment, the number of rear wheels 43 is one. The invention is not limited to this. For example, the number of rear wheels 43 may be changed to two.
(27) In the foregoing embodiment, the straddled vehicle 1 includes the engine 26 (i.e. internal combustion engine) as the source of power. The invention is not limited to this. For example, the straddled vehicle 1 may have an electric motor as the source of power.
(28) The foregoing embodiment and each of the modified embodiments described in paragraphs (1) to (27) above may be further varied as appropriate by replacing or combining their constructions with the constructions of the other modified embodiments.

## Claims

1. A straddled vehicle (1) comprising:
a frame (3) including:
a main frame (12) extending rearward and downward from a front of the straddled vehicle (1);
a seat frame (14) connected to the main frame (12) and extending rearward from the main frame (12); and
a back stay (15) connected to the main frame (12) in a position (M2) lower than a connecting position (M1) of the main frame (12) and the seat frame (14), extending rearward and upward from the main frame (12), and connected to the seat frame (14) in a position (M3) rearward of the connecting position (M1) of the main frame (12) and the seat frame (14);
a seat (28) fixed to the seat frame (14) by a bolt (48);
a side cover (31) having at least part thereof disposed, in a side view of the vehicle, in a first area (A) surrounded by the main frame (12), the seat frame (14), and the back stay (15);
a lock (63) attached to the side cover (31) and operable by a key to fix the side cover (31) to the frame (3);
a junction member (71) for detachably joining the side cover (31) to the frame (3); and
a hook (91) supported by the frame (3);
wherein
the side cover (31), in the side view of the vehicle, overlaps at least part of at lease one of a battery (51), an air cleaner (111), and a tool compartment (55) in the first area (A);
the junction member (71) joins the side cover (31) to the frame (3) to be slidable in a first direction (D) relative to the frame (3);
the junction member (71) includes:
a first member (73) fixed to the frame (3); and
a second member (77) fixed to the side cover (31) for joining to and separating from the first member (73) by moving in the first direction (D) relative to the first member (73);
the first direction (D) has a first component (y) extending in a transverse direction (Y) of the straddled vehicle (1), and a second component (xz) extending perpendicular to the transverse direction (Y) and larger than the first component (y);
when the junction member (71) joins the side cover (31) to the frame (3), the junction member (71) prohibits the side cover (31) from moving in the transverse direction (Y) relative to the frame (3);
an upper end (93) of the hook (91) overlaps the side cover (31) in the side view of the vehicle; **characterized in that** a bottom (92) of the hook (91) does not overlap the side cover (31) in the side view of the vehicle; and
the hook (91) is disposed in a position closer to the junction member (71) than to the lock (63) in the side view of the vehicle.

2. The straddled vehicle (1) according to claim 1, further comprising:
a receiver (67) fixed to the frame (3) for joining with the lock (63);
wherein the hook (91) is disposed in a position closer to the first member (73) than to the receiver (67) in the side view of the vehicle.

3. The straddled vehicle (1) according to claim 1 or 2, wherein:
at least one of the first member (73) and the second member (77) includes a projection (75) extending in the first direction (D);
when the first member (73) includes the projection (75), the second member (77) includes a bore (E) into which the projection (75) of the first member (73) can be inserted; and when the second member (77) includes the projection (75), the first member (73) includes a bore (E) into which the projection (75) of the second member (77) can be inserted.

4. The straddled vehicle (1) according to any one of claims 1 to 3, wherein:
the first member (73) is fixed to a bracket (17) connected to both the seat frame (14) and the back stay (15); and
the second member (77) is formed integral with the side cover (31).

5. The straddled vehicle (1) according to any one of claims 1 to 4, wherein:
the side cover (31) includes a first edge portion (32) extending along an imaginary line (IL) linking the lock (63) and the junction member (71) in the side view of the vehicle; and
the hook (91) intersects the first edge portion (32) in the side view of the vehicle.

6. The straddled vehicle (1) according to claim 5, wherein; the hook (91) includes:
an upper part (97) located above the back stay (15) in the side view of the vehicle;
an overlapping part (98) overlapping the back stay (15) in the side view
of the vehicle; and
a lower part (99) located below the back stay (15) in the side view of the vehicle; and
the first edge portion (32) intersects at least one of the overlapping part (98) and the lower part (99) in the side view of the vehicle.

7. The straddled vehicle (1) according to claim 5 or 6, wherein:
the side cover (31) includes:
a turnback (34) extending inward of the transverse direction (Y) from the first edge portion (32); and
a cutout (35) formed in the turnback (34); and
the hook (91) passes through the cutout (35).

8. The straddled vehicle (1) according to any one of claims 1 to 7, wherein the upper end (93) of the hook (91) overlaps the side cover (31) in a bottom view.

9. The straddled vehicle (1) according to any one of claims 1 to 8, wherein the hook (91) includes a first part (94) inclined outward in the transverse direction (Y) as the first part (94) extends upward to the upper end (93) of the hook (91).

10. The straddled vehicle (1) according to any one of claims 1 to 9, wherein, when the lock (63) fixes the side cover (31) to the frame (3), the lock (63) and the junction member (71) are located, in a bottom view, on the same straight line (Lx) parallel to a longitudinal direction of the straddled vehicle (1).

11. The straddled vehicle (1) according to any one of claims 1 to 10, further comprising a receiver (67) fixed to the frame (3) for joining with the lock (63);
wherein, when the lock (63) is joined with the receiver (67), the lock (63) is prohibited from moving relative to the receiver (67).

12. The straddled vehicle (1) according to claim 11, further comprising:
a battery holder (53) supported by the frame (3); and
a battery (51) held by the battery holder (53);
wherein
the side cover (31), in the side view of the vehicle, overlaps at least part of the battery (51) in the first area (A); and
the receiver (67) is supported by the battery holder (53) .

13. The straddled vehicle (1) according to claim 12, wherein:
a material for the battery holder (53) and the receiver (67) is a resin; and
the battery holder (53) and the receiver (67) are formed integral with each other.

14. The straddled vehicle (1) according to any one of claims 1 to 13, further comprising an engine (26) disposed forward of the side cover (31).

## Patentansprüche

1. Spreizsitz-Fahrzeug (1), das umfasst:
einen Rahmen (3), der enthält:
einen Haupt-Rahmen (12), der sich von einer Vorderseite des Spreizsitz-Fahrzeugs (1) aus nach hinten und nach unten erstreckt;
einen Sitz-Rahmen (14), der mit dem Haupt-Rahmen (12) verbunden ist und sich von dem Haupt-Rahmen (12) aus nach hinten erstreckt; sowie
eine Hinterradstrebe (15), die mit dem Haupt-Rahmen (12) an einer Position (M2) verbunden ist, die tiefer liegt als eine Verbindungsposition (M1) des Haupt-Rahmens (12) und des Sitz-Rahmens (14), sich von dem Haupt-Rahmen (12) nach hinten und nach oben erstreckt und mit dem Sitz-Rahmen (14) an einer Position (M3) verbunden ist, die hinter der Verbindungsposition (M1) des Haupt-Rahmens (12) und des Sitz-Rahmens (14) liegt;
einen Sitz (28), der an dem Sitz-Rahmen (14) mit einer Schraube (48) befestigt ist;
eine Seitenverkleidung (31), wobei wenigstens ein Teil derselben, in einer Seitenansicht des Fahrzeugs, in einem ersten Bereich (A) angeordnet ist, der von dem Haupt-Rahmen (12), dem Sitz-Rahmen (14) und der Hinterradstrebe (15) umgeben ist;
ein Schloss (63), das an der Seitenverkleidung (31) angebracht ist und mit einem Schlüssel betätigt werden kann, um die Seitenverkleidung (31) an dem Rahmen (3) zu befestigen;
ein Verbindungselement (71) zum lösbaren Verbinden der Seitenverkleidung (31) mit dem Rahmen (3); und
einen Haken (91), der von dem Rahmen (3) getragen wird;
wobei
die Seitenverkleidung (31), in der Seitenansicht des Fahrzeugs, wenigstens einen Teil einer Batterie (51), eines Luftfilters (111) oder/und eines Werkzeugfachs (55) in dem ersten Bereich (A) überlappt;
das Verbindungselement (71) die Seitenverkleidung (31) so mit dem Rahmen (3) verbindet, dass sie in einer ersten Richtung (D) relativ zu dem Rahmen (3) verschoben werden kann; und
das Verbindungselement (71) enthält:
ein erstes Element (73), das an dem Rahmen (3) befestigt ist; sowie
ein zweites Element (77), das an der Seitenverkleidung (31) befestigt ist und durch Bewegen in der ersten Richtung (D) relativ zu dem ersten Element (73) mit dem ersten Element (73) verbunden und von ihm getrennt wird;
wobei die erste Richtung (D) eine erste Komponente (y), die in einer Quer-Richtung (Y) des Spreizsitzfahrzeugs (1) verläuft, und eine zweite Komponente (xz) hat, die senkrecht zu der Quer-Richtung (Y) verläuft und größer ist als die erste Komponente (y);
wenn das Verbindungselement (71) die Seitenverkleidung (31) mit dem Rahmen (3) verbindet, das Verbindungselement (71) die Seitenverkleidung (31) daran hindert, sich in der Quer-Richtung (Y) relativ zu dem Rahmen (3) zu bewegen;
ein oberes Ende (93) des Hakens (91) die Seitenverkleidung (31) in der Seitenansicht des Fahrzeugs überlappt;
**dadurch gekennzeichnet, dass** ein unteres Ende (92) des Hakens (91) die Seitenverkleidung (31) in der Seitenansicht des Fahrzeugs nicht überlappt; und
der Haken (91) an einer Position angeordnet ist, die, in der Seitenansicht des Fahrzeugs, näher an dem Verbindungselement (71) liegt als an dem Schloss (63).

2. Spreizsitz-Fahrzeug (1) nach Anspruch 1, das des Weiteren umfasst:
eine Aufnahme (67), die zum Verbinden mit dem Schloss (63) an dem Rahmen (3) befestigt ist;
wobei der Haken (91) an einer Position angeordnet ist, die, in der Seitenansicht des Fahrzeugs, näher an dem ersten Element (73) liegt als an der Aufnahme (67).

3. Spreizsitz-Fahrzeug (1) nach Anspruch 1 oder 2, wobei:
das erste Element (73) oder/und das zweite Element (77) einen Vorsprung (75) enthält/enthalten, der sich in der ersten Richtung (D) erstreckt;
wenn das erste Element (73) den Vorsprung (75) enthält, das zweite Element (77) eine Bohrung (E) enthält, in die der Vorsprung (75) des ersten Elementes (73) eingeführt werden kann; und
wenn das zweite Element (77) den Vorsprung (75) enthält, das erste Element (73) eine Bohrung (E) enthält, in die der Vorsprung (75) des zweiten Elementes (77) eingeführt werden kann.

4. Spreizsitz-Fahrzeug (1) nach einem der Ansprüche 1 bis 3, wobei:
das erste Element (73) an einem Halter (17) befestigt ist, der sowohl mit dem Sitz-Rahmen (14) als auch der Hinterradstrebe (15) verbunden ist; und
das zweite Element (77) integral mit der Seitenverkleidung (31) ausgebildet ist.

5. Spreizsitz-Fahrzeug (1) nach einem der Ansprüche 1 bis 4, wobei:
die Seitenverkleidung (31) einen ersten Kanten-Abschnitt (32) enthält, der, in der Seitenansicht des Fahrzeugs, entlang einer imaginären Linie (IL) verläuft, die das Schloss (63) und das Verbindungselement (71) miteinander verbindet; und
der Haken (91) den ersten Kanten-Abschnitt (32) in der Seitenansicht des Fahrzeugs schneidet.

6. Spreizsitz-Fahrzeug (1) nach Anspruch 5, wobei:
der Haken (91) enthält:
einen oberen Teil (97), der sich, in der Seitenansicht des Fahrzeugs, oberhalb der Hinterradstrebe (15) befindet;
einen überlappenden Teil (98), der die Hinterradstrebe (15) in der Seitenansicht des Fahrzeugs überlappt; sowie
einen unteren Teil (99), der sich, in der Seitenansicht des Fahrzeugs, unterhalb der Hinterradstrebe (15) befindet; und
der erste Kanten-Abschnitt (32), in der Seitenansicht des Fahrzeugs, den überlappenden Teil (98) oder/und den unteren Teil (99) schneidet.

7. Spreizsitz-Fahrzeug (1) nach Anspruch 5 oder 6, wobei:
die Seitenverkleidung (31) enthält:
einen Umschlag (34), der sich von dem ersten Kanten-Abschnitt (32) aus in der Quer-Richtung (Y) nach innen erstreckt; sowie
einen Ausschnitt (35), der in dem Umschlag (34) ausgebildet ist; und
der Haken (91) durch den Ausschnitt (35) hindurchtritt.

8. Spreizsitz-Fahrzeug (1) nach einem der Ansprüche 1 bis 7, wobei das obere Ende (93) des Hakens (91), in einer Unteransicht, die Seitenverkleidung (31) überlappt.

9. Spreizsitz-Fahrzeug (1) nach einem der Ansprüche 1 bis 8, wobei der Haken (91) einen ersten Teil (94) enthält, der sich im Verlauf des ersten Teils (94) nach oben zu dem oberen Ende (93) des Hakens (91) in der Quer-Richtung nach außen neigt.

10. Spreizsitz-Fahrzeug (1) nach einem der Ansprüche 1 bis 9, wobei, wenn die Seitenverkleidung (31) mit dem Schloss (63) an dem Rahmen (3) befestigt ist, das Schloss (63) und das Verbindungselement (71), in einer Unteransicht, auf der gleichen geraden Linie (Lx) parallel zu einer Längsrichtung des Spreizsitz-Fahrzeugs (1) liegen.

11. Spreizsitz-Fahrzeug (1) nach einem der Ansprüche 1 bis 10, das des Weiteren eine Aufnahme (67) umfasst, die zum Verbinden mit dem Schloss (63) an dem Rahmen (3) befestigt ist;
wobei, wenn das Schloss (63) mit der Aufnahme (67) verbunden ist, das Schloss (63) daran gehindert wird, sich relativ zu der Aufnahme (67) zu bewegen.

12. Spreizsitz-Fahrzeug (1) nach Anspruch 11, das des Weiteren umfasst:
eine Batterie-Halterung (53), die von dem Rahmen (3) getragen wird; sowie
eine Batterie (51), die von der Batterie-Halterung (53) gehalten wird;
wobei
die Seitenverkleidung (31), in der Seitenansicht des Fahrzeugs, wenigstens einen Teil der Batterie (51) in dem ersten Bereich (A) überlappt; und
die Aufnahme (67) von der Batterie-Halterung (53) getragen wird.

13. Spreizsitz-Fahrzeug (1) nach Anspruch 12, wobei:
ein Material für die Batterie-Halterung (53) und die Aufnahme (67) ein Kunststoff ist; und
die Batterie-Halterung (53) und die Aufnahme (67) integral miteinander ausgebildet sind.

14. Spreizsitz-Fahrzeug (1) nach einem der Ansprüche 1 bis 13, die des Weiteren einen Motor (26) umfasst, der vor der Seitenverkleidung (31) angeordnet ist.

## Revendications

1. Véhicule à enfourcher (1) comportant :
un châssis (3) comprenant :
un châssis principal (12) s'étendant vers l'arrière et vers le bas depuis l'avant du véhicule à enfourcher (1) ;
un châssis de siège (14) connecté au châssis principal (12) et s'étendant vers l'arrière depuis le châssis principal (12) ; et
un tube montant arrière (15), connecté au châssis principal (12) en un emplacement (M2) situé plus bas qu'un emplacement de connexion (M1) du châssis principal (12) avec le châssis de siège (14), s'étendant vers l'arrière et vers le haut depuis le châssis principal (12), et connecté au châssis de siège (14) en un emplacement (M3) situé vers l'arrière par rapport à l'emplacement de connexion (M1) du châssis principal (12) avec le châssis de siège (14) ;
un siège (28) fixé au châssis de siège (14) par un boulon (48) ;
un capot latéral (31) dont au moins une partie est disposée, dans une vue de côté du véhicule, dans une première région (A) entourée par le châssis principal (12), le châssis de siège (14) et le tube montant arrière (15) ;
une serrure (63) attachée au capot latéral (31) et pouvant être actionnée au moyen d'une clé pour fixer le capot (31) sur le châssis (3) ;
un élément de raccord (71) pour raccorder le capot latéral (31) au châssis (3) de manière détachable ; et
un crochet (91) porté par le châssis (3) ;
où
dans la vue de côté du véhicule, le capot latéral (31) se superpose à au moins une partie d'une batterie (51), et/ou d'un filtre à air (111), et/ou d'un compartiment à outils (55) dans la première région (A) ;
l'élément de raccord (71) raccorde le capot latéral (31) au châssis (3) de manière coulissante dans une première direction (D) par rapport au châssis (3) ;
l'élément de raccord (71) comprend :
un premier élément (73) fixé sur le châssis (3) ; et
un second élément (77) fixé au capot latéral (31) pour le raccorder et le séparer du premier élément (73) par un déplacement dans la première direction (D) par rapport au premier élément (73) ;
la première direction (D) présente une première composante (y) s'étendant dans une direction transversale (Y) du véhicule à enfourcher (1), et une seconde composante (xz) s'étendant perpendiculairement à la direction transversale (Y) et plus grande que la première composante (y) ;
où l'élément de raccord (71) relie le capot latéral (31) au châssis (3), l'élément de raccord (71) empêche le capot latéral (31) de se déplacer dans la direction transversale (Y) par rapport au châssis (3) ;
une extrémité supérieure (93) du crocher (91) se superpose au capot latéral (31) dans la vue de côté du véhicule ;
**caractérisé en ce que** le bas (92) du crochet (91) ne se superpose pas au capot latéral (31) dans la vue de côté du véhicule ; et
le crochet (91) est disposé en un emplacement plus proche de l'élément de raccord (71) que de la serrure (63) dans la vue de côté du véhicule.

2. Véhicule à enfourcher (1) selon la revendication 1, comportant en outre :
un logement (67) fixé au châssis (3) et destiné à être raccordé à la serrure (63) ;
où le crochet (91) est disposé en un emplacement plus proche du premier élément (73) que du logement (67) dans la vue de côté du véhicule.

3. Véhicule à enfourcher (1) selon la revendication 1 ou 2, où :
le premier élément (73) et/ou le second élément (77) comprend une saillie (75) s'étendant dans la première direction (D) ;
quand le premier élément (73) comprend la saillie (75), le second élément (77) comprend un trou (E) dans lequel la saillie (75) du premier élément (73) peut être insérée ; et
quand le second élément (77) comprend la saillie (75), le premier élément (73) comprend un trou (E) dans lequel la saillie (75) du second élément (77) peut être insérée.

4. Véhicule à enfourcher (1) selon l'une quelconque des revendications 1 à 3, où :
le premier élément (73) est fixé à un support (17) connecté au châssis (14) et au tube montant arrière (15) ; et
le second élément (77) est formé en une pièce avec le capot latéral (31).

5. Véhicule à enfourcher (1) selon l'une quelconque des revendications 1 à 4, où :
le capot latéral (31) comprend une première partie de bord (32) s'étendant le long d'une ligne imaginaire (IL) reliant la serrure (63) et l'élément de raccord (71) dans la vue de côté du véhicule ; et
le crochet (91) croise la première partie de bord (32) dans la vue de côté du véhicule.

6. Véhicule à enfourcher (1) selon la revendication 5, où :
le crochet (91) comprend :
une partie supérieure (97) située au-dessus du tube montant arrière (15) dans la vue de côté du véhicule ;
une partie de superposition (98) se superposant au tube montant arrière (15) dans la vue de côté du véhicule ; et
une partie inférieure (99) située sous le tube montant arrière (15) dans la vue de côté du véhicule ; et
la première partie de bord (32) croise la partie de superposition (98) et/ou la partie inférieure (99) dans la vue de côté du véhicule.

7. Véhicule à enfourcher (1) selon la revendication 5 ou 6, où :
le capot latéral (31) comprend :
un rabat (34) s'étendant vers l'intérieur de la direction transversale (Y) à partir de la première partie de bord (32) ; et
une encoche (35) formée dans le rabat (34) ; et
le crochet (91) passe à travers l'encoche (35).

8. Véhicule à enfourcher (1) selon l'une quelconque des revendications 1 à 7, où l'extrémité supérieure (93) du crochet (91) se superpose au capot latéral (31) dans une vue d'en bas.

9. Véhicule à enfourcher (1) selon l'une quelconque des revendications 1 à 8, où le crochet (91) comprend une première partie (94) qui s'incline vers l'extérieur dans la direction transversale (Y) à mesure que la première partie (94) s'étend vers le haut depuis l'extrémité supérieure (93) du crochet (91).

10. Véhicule à enfourcher (1) selon l'une quelconque des revendications 1 à 9, où, quand la serrure (63) fixe le capot latéral (31) au châssis (3), la serrure (63) et l'élément de raccord (71) sont situés, dans une vue d'en bas, sur la même ligne droite (Lx) parallèle à une direction longitudinale du véhicule à enfourcher (1).

11. Véhicule à enfourcher (1) selon l'une quelconque des revendications 1 à 10, comportant en outre un logement (67) fixé au châssis (3) et destiné à être raccordé à la serrure (63) ;
où lorsque la serrure (63) est raccordée au logement (67), la serrure (63) ne peut pas se déplacer par rapport au logement (67).

12. Véhicule à enfourcher (1) selon la revendication 11, comportant en outre :
un support de batterie (53) porté par le châssis (3) ; et
une batterie (51) maintenue par le support de batterie (53) ;
où
dans une vue de côté du véhicule, le capot latéral (31) se superpose à au moins une partie de la batterie (51) dans la première région (A) ; et
le logement (67) est porté par le support de batterie (53).

13. Véhicule à enfourcher (1) selon la revendication 12, où :
un matériau du support de batterie (53) et du logement (67) est une résine ; et
le support de batterie (53) et le logement (67) sont formés en une pièce.

14. Véhicule à enfourcher selon l'une quelconque des revendications 1 à 13, comportant en outre un moteur (26) disposé à l'avant du capot latéral (31).
